# EUROPEAN PATENT SPECIFICATION

(11) **EP 4 360 052 B1**
(45) Date of publication and mention of the grant of the patent: **09.09.2026**
(21) Application number: 22827849.5
(22) Date of filing: 21.06.2022
(51) Int. Cl.: G06T 7/80, G06T 7/73, G01C 21/20, G01S 13/50, G01S 13/06, G01S 13/86, G01S 13/937, G08G 3/02, G06V 20/52, G06V 10/80

(54) **AUTOMATIC CAMERA REGISTRATION AND CALIBRATION USING MARINE SENSORS**
AUTOMATISCHE KAMERAREGISTRIERUNG UND KALIBRIERUNG MIT MARINEN SENSOREN
ENREGISTREMENT ET ÉTALONNAGE AUTOMATIQUES DE CAMÉRA À L'AIDE DE CAPTEURS MARINS

(30) Priority: 21.06.2021 IL 28425121
(43) Date of publication of application: 01.05.2024
(73) Proprietor: Orca AI Ltd., 6761304 Tel Aviv (IL)
(72) Inventor: RAVIV, Dor, 6940421 Tel Aviv (IL); NATIV, Yonathan, 6606711 Tel Aviv (IL); YURKOV, Anton, 5250508 Ramat Gan (IL)
(74) Representative: Plasseraud IP
(86) International application number: PCT/IL2022/050665
(87) International publication number: WO 2022/269609

(56) References cited:
- WO-A1-2008/053887
- WO-A1-2010/117278
- WO-A1-2019/239460
- CN-A- 111 856 448
- KR-A- 20160 115 130
- US-A1- 2018 307 238
- US-A1- 2019 360 810
- US-A1- 2021 073 573

## Description

### TECHNICAL FIELD

The presently disclosed subject matter relates to the field of marine environment.

### BACKGROUND

In the marine environment, a marine vessel travels on a route on which it can encounter various situations. Some of these situations can include dangers, e.g. an obstacle to be avoided, zones with dangerous weather, etc.

It is known in contemporary art that marine vessels can be equipped with sensors acquiring data representative of one or more situations encountered by the marine vessel during its voyage. For example, as disclosed in International Application WO2008/053887, such data can be useful for assisting steering and mooring alongside of vessels. As disclosed in WO2008/053887, physical relationship between a hull of the first vessel and a hull of the second vessel is calculated in the form of numerical data based on information on a reference position of a first vessel that is detected by a first GPS receiver, information on a reference position of a second vessel that is detected by a second GPS receiver, oscillation information on the first vessel, oscillation information on the second vessel, information on a distance between the two vessels that is measured by distance measuring device, coordinate data including hull outer shape and the like against the reference position for each vessel, and air pressure data for each fender. Information on the physical relationship between the hull of said first vessel and the hull of said second vessel based on the numerical data and the state of each fender are displayed on a first display device provided for a steering room of the first vessel and a second display device provided for a steering room of the second vessel by means of animation.

It is now necessary to provide new methods and systems in order to improve safety and reliability of marine vessels navigation, improve understanding of the marine environment for marine vessels and improve control of marine vessels by providing a multi-sensor approach, in which a smart combination of information provided by the various sensors enables to determine data informative of marine targets in a more complete and accurate way, and in real time. More generally, it is necessary to develop innovative methods in the marine domain, and in particular, in the field of autonomous ships.

### GENERAL DESCRIPTION

The present invention is defined by the subject-matter of the appended claims. Further features of the present invention will become apparent from the following description of exemplary embodiments with reference to the attached drawings.

### BRIEF DESCRIPTION OF THE DRAWINGS

In order to understand the invention and to see how it can be carried out in practice, embodiments will be described, by way of non-limiting examples, with reference to the accompanying drawings, in which:
- **Fig. 1** illustrates an embodiment of a system which can be used to perform one or more of the methods described hereinafter;
- **Fig. 2A** illustrates an embodiment of a method of determining data informative of a height and/or orientation of an imaging device of a marine vessel (as explained hereinafter, additional state parameters of the marine vessel can be determined);
- **Fig. 2B** illustrates a variant of the method of **Fig. 2A****;**
- **Fig. 2C** illustrates an example of tracking marine objects over a plurality of images acquired by an imaging device of a marine vessel;
- **Fig. 2D** illustrates a method of determining data informative of a height and/or orientation of an imaging device of a marine vessel over time;
- **Fig. 2E** illustrates operations which can be performed in accordance with the method of **Fig. 2A****;**
- **Fig. 2F** illustrates schematically a projection of the position of the marine objects acquired by the imaging device and the position of the marine objects acquired by another sensor into a common referential;
- **Fig. 2G** illustrates an embodiment of a method of projecting position of a marine object from the image to a global/absolute referential (independent from the image);
- **Figs. 2H** to **2K** illustrate parameters that can be used in the method of **Fig. 2G****;**
- **Fig. 2L** illustrates an example of an output of the method of **Fig. 2E****;**
- **Fig. 2M** illustrates operations which can be performed in accordance with the method of **Fig. 2B****;**
- **Figs. 2N** and **2O** illustrate an embodiment of using tracking data of marine objects to improve solving of an optimization problem in the method of **Fig. 2M****;**
- **Figs. 3A** and **3B** illustrate an embodiment of using types of marine objects to improve solving of an optimization problem in the methods of **Figs. 2E** and **2M****;**
- **Fig. 4A** illustrates an embodiment of the method of **Fig. 2A****;**
- **Fig. 4B** illustrates another embodiment of the method of **Fig. 2A****;**
- **Fig. 5A** illustrates an embodiment of a method of fusing parameters of multiple sensors;
- **Fig. 5B** illustrates an embodiment of generating a database of marine objects;
- **Fig. 5C** illustrates an embodiment of a method of determining absolute position of a marine object based on an estimation of height and/or orientation of an imaging device of the marine vessel;
- **Figs. 6A** and **6B** illustrate an embodiment of a method of determining velocity of a marine object based on an estimation of height and/or orientation of an imaging device of the marine vessel;
- **Fig. 7** illustrates an embodiment of a method of determining position of marine objects surrounding a marine vessel in a common referential; and
- **Fig. 8** illustrates an embodiment of a method of calibrating another sensor of the marine vessel; and
- **Fig. 9** illustrates an embodiment of a method of determining absolute position of an imaging device of the marine vessel.

### DETAILED DESCRIPTION

In the following detailed description, numerous specific details are set forth in order to provide a thorough understanding of the invention. However, it will be understood by those skilled in the art that the presently disclosed subject matter may be practiced without these specific details. In other instances, well-known methods have not been described in detail so as not to obscure the presently disclosed subject matter.

Unless specifically stated otherwise, as apparent from the following discussions, it is appreciated that throughout the specification discussions utilizing terms such as "obtaining", "using", "solving", "determining", "estimating", "tracking", "merging" or the like, refer to the action(s) and/or process(es) of a processor and memory circuitry (PMC) that manipulate and/or transform data into other data, said data represented as physical, such as electronic, quantities and/or said data representing the physical objects.

The term "processor and memory circuitry" (PMC) as disclosed herein should be broadly construed to include any kind of electronic device with data processing circuitry, which includes for example a computer processing device operatively connected to a computer memory (e.g. digital signal processor (DSP), a microcontroller, a field programmable gate array (FPGA), and an application specific integrated circuit (ASIC), etc.) capable of executing various data processing operations.

It can encompass a single processor or multiple processors, which may be located in the same geographical zone, or may, at least partially, be located in different zones and may be able to communicate together.

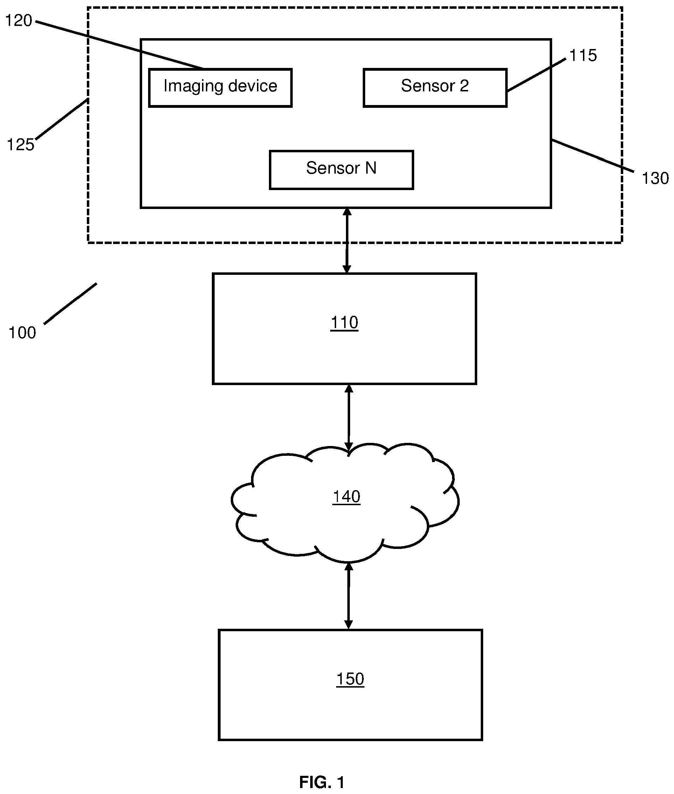

**Fig. 1** illustrates an embodiment of a system **100** which can be used to perform one or more of the methods described hereinafter. As shown, system **100** comprises a processor and memory circuitry (PMC) **110.**

System **100** can be embedded on a marine platform. In particular, the marine platform can be a moving marine platform. The moving marine platform can be e.g. a marine vessel **125.** Marine vessels include e.g. ships, boats, hovercraft, etc.

In some embodiments, system **100** can be embedded on a marine platform which can be stationary, or at least temporarily stationary.

Although embodiments will be described with reference to marine vessels **125,** it is to be understood that these embodiments apply similarly to a stationary marine platform.

As shown in **Fig. 1****,** system **100** can obtain data from at least some of the sensors **130.** At least some of the sensors **130** can be located on the marine vessel **125** on which system **100** is located (or on at least one other marine vessel/object communicating with the marine vessel **125** on which system **100** is located).

Sensors **130** collect data during the voyage of the marine vessel **125.** The voyage includes portions of the voyage in which the marine vessel is in motion but can also include portions of the voyage in which the marine vessel is substantially static (e.g., when the marine vessel **125** is moored or docked such as at a harbor).

Sensors **130** can include an imaging device **120** (e.g. a camera).

In some embodiments, the camera includes an infrared camera, a night camera, a day camera, etc.

In some embodiments, sensors **130** include a plurality of imaging devices **120** (which can be distinct).

In addition, sensors **130** include one or more additional sensors **115** (which are not necessarily imaging devices) such as (this list is not limitative) a radar (any type of radar), a LIDAR, automatic identification system (AIS), a transponder communicating with GPS located on other marine objects, a system which includes a laser located on the marine vessel **125** and an optical reflector located on another marine object to be located by the marine vessel **125** (reflection of the laser by the reflector enables localization of the other marine object), etc.

In particular, sensors **115** provide information usable to localize marine objects surrounding the marine vessel **125.**

The marine vessel **125** itself can include other sensors, such a geo-localization system (e.g. GPS), IMU, velocity and acceleration sensors, gyro compass, etc.

As explained hereinafter in the specification, system **100** can process data collected by sensors **130.**

In some embodiments, data output by system **100** can be transmitted through a remote communication network **140** towards e.g., a central station **150,** which can include at least one processor and memory circuitry (PMC).

In some embodiments, the central station **150** can perform at least some of the tasks of PMC **110** located on the marine vessel **125.**

The remote communication link can correspond e.g. to a broadband cellular network (e.g. 4G, 5G, LTE, etc.), a satellite communication network, Radio communication network (such as Radio VHF - very high frequency), etc.

Data can be transmitted using a communication system located on the marine vessel **125** which is suitable to transmit data via the remote communication network. The communication system can include e.g., an antenna, an emitter, a transponder, etc.

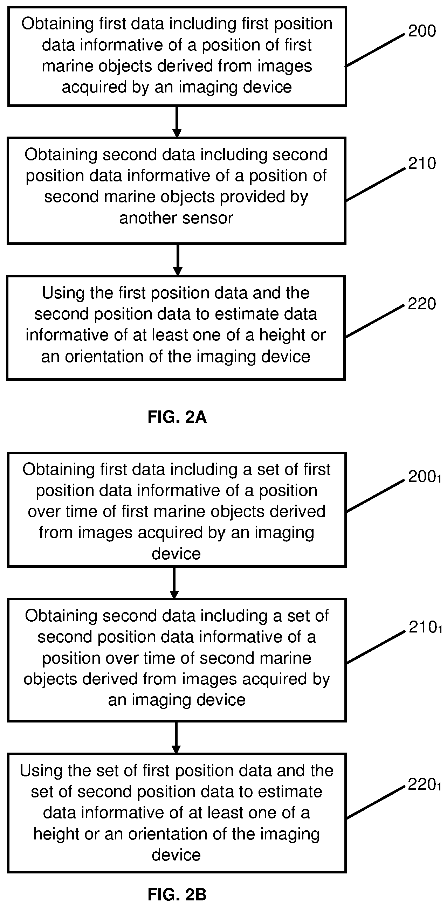

Attention is now drawn to **Fig. 2A****.**

During the voyage of the marine vessel **125,** data is acquired by one or more of the sensors **130** of the marine vessel **125.**

Data are representative of one or more situations encountered by the marine vessel during its voyage.

In particular, during the voyage of the marine vessel **125,** various objects (hereinafter marine objects - e.g. icebergs, buoys, other marine vessels, etc.) can be encountered by the marine vessel **125,** and data informative of these marine objects can be acquired. The marine objects generally include at least a part which is located above sea level.

As shown in **Fig. 2A****,** the method includes obtaining (operation **200**) first data informative of first marine objects.

The first data is obtained based on images acquired by the imaging device **120** of the marine vessel **125.** In some embodiments, the first data is obtained based on images acquired by a plurality of imaging devices **120** of the marine vessel **125.** The first data includes first position data informative of a position of first marine objects.

Generally, the first position data is expressed in the referential of the imaging device **120.** A PMC is configured to detect, in a given image acquired by the imaging device **120,** marine objects present in the image. This detection can rely e.g. on an image processing algorithm. In some embodiments, a machine learning module (which implements e.g. a deep neural network) is trained to detect marine objects present in images acquired by an imaging device of a marine vessel. This training can include supervised learning in which a plurality of annotated images comprising marine objects are fed to the machine learning module. This is not limitative, and the training can also include automatic training and/or non-supervised learning.

In some embodiments, the machine learning module can provide information on the type of the object (e.g. marine vessel, type of marine vessel, iceberg, etc.). This can be obtained by performing supervised learning of the machine learning module, in which labelled images comprising marine objects (together with their type, which corresponds to the label) are fed to the machine learning module for its training.

Once a given marine object is detected in an image acquired by the imaging device **120,** its position (e.g. pixel position comprising a position along the X axis of the image and a position along the Y axis of the image) in the image can be obtained. Therefore, for each marine object acquired by the imaging device **120,** a position in the image can be obtained. The first position data can include, in some embodiments, the position of each given object of the first marine objects in the image in which the given object has been detected.

According to some embodiments, the imaging device **120** acquires a plurality of images at a plurality of periods of time. As a consequence, it is possible to obtain position over time of the first marine objects.

In particular, the method can include obtaining a set of first position data (see operation **200₁** in **Fig. 2B**). The set of first position data includes, for each object of the first marine objects, position of the object at the plurality of periods of time.

Indeed, since the marine vessel **125** moves over time and/or at least some of the first marine objects move over time, the position of the first marine objects in the images acquired by the imaging device **120** can change over time.

According to some embodiments, in order to generate the set of first position data, it is possible to track the first marine objects in the plurality of images acquired by the imaging device **120.**

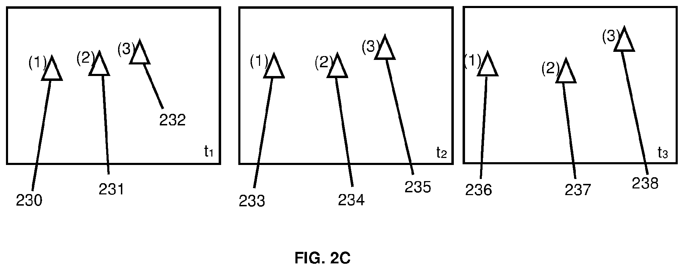

A non-limitative example is provided with reference to **Fig. 2C****.**

Assume that at time t₁, an image is acquired by the imaging device **120.** In this image, three marine objects are detected. A first marine object is located at position **230,** a second marine object is located at position **231,** and a third marine object is located at position **232.**

At time t₂ (different from t₁), another image is acquired by the imaging device **120.** In this image, three marine objects are detected. A first marine object is located at position **233,** a second marine object is located at position **234,** and a third marine object is located at position **235.**

At time t₃ (different from t₂), another image is acquired by the imaging device **120.** In this image, three marine objects are detected. A first marine object is located at position **236,** a second marine object is located at position **237,** and a third marine object is located at position **238.**

A tracking method can be used to track the various marine objects over the different images. The tracking method can be implemented by a PMC. The tracking method can implement e.g., a Kalman filter, or other adapted tracking methods.

In some embodiments, it can appear that a marine object is present in some of the images and disappear in subsequent images. This can be due to the relative motion between the marine object and the marine vessel **125.**

In the example of **Fig. 2C****,** the tracking method reveals that the marine object located at position **230** at time t₁, the marine object located at position **233** at time t₂ and the marine object located at position **236** at time t₃ correspond to the same object at different periods of time. Therefore, the same tracking ID (in this example "(1)") can be assigned to indicate that the same marine object is present at different positions in the different images.

Similarly, the tracking method reveals that the marine object located at position **231** at time t₁, the marine object located at position **234** at time t₂ and the marine object located at position **237** at time t₃ correspond to the same marine object at different periods of time. Therefore, the same tracking ID (in this example "(2)") can be assigned.

Similarly, the tracking method reveals that the marine object located at position **232** at time t₁, the marine object located at position **235** at time t₂ and the marine object located at position **238** at time t₃ correspond to the same marine object. Therefore, the same tracking ID (in this example "(3)") can be assigned.

The method includes obtaining **(210)** second data informative of second marine objects.

Although **Fig. 2A** depicts a sequence in which the first position data is first obtained and then the second position data, this is not mandatory and this can be performed in the opposite way, or simultaneously. This is also true for the sequence depicted in **Fig. 2B****.**

The second data is obtained based on data acquired by at least one sensor **115** of the marine vessel **125.** Sensor **115** is different from imaging device **120.** In some embodiments, sensor **115** is not an imaging device (e.g., not a camera). Various examples have been provided above for sensor **115** (e.g., a radar, AIS, etc.).

The second data includes second position data informative of a position of second marine objects encountered by the marine vessel **125** during its voyage. As explained hereinafter, according to some embodiments, the method projects position of the targets detected by the various sensors (which can be expressed in different referentials) within a common referential.

In some embodiments, a plurality of sensors **115** is available, which includes sensors **115** of different types (e.g., a first sensor is a radar, a second sensor is AIS, a third sensor is GPS, etc.). In this case, for each sensor, position data of marine objects detected by this sensor is obtained. As explained hereinafter, each sensor can detect different marine objects, but at least a plurality of the marine objects surrounding the marine vessel **125** is detected by different sensors **115.**

At least some of the first marine objects and the second marine objects correspond to the same physical marine objects. For example, the first marine objects include a first given marine vessel, a second given marine vessel, and a buoy. The second marine objects include the first given marine vessel, the second given marine vessel, and an iceberg.

This difference between the first marine objects and the second marine objects can be due to the fact that the imaging device **120** and the other sensors **115** have a different field of view, and/or a different line of sight, and/or different capabilities of detecting objects (e.g., depending on the type of the sensor, its capability to detect objects can depend e.g. on weather conditions, size of the object, type of the object, etc.). In addition, the imaging device **120** and the other sensor(s) **115** can present other differences (for example, the imaging device **120** can be used to classify marine objects, which is not possible for all sensors **115,** such as radar).

Distance between the marine vessel **125** and the marine objects can also impact the detection of the marine objects by the sensors of the marine vessel **125.** For example, a radar is operative to detect marine objects at medium-long range, but has a blind zone at short range, whereas the imaging device **120** better performs at short range than at long range for detecting marine objects. Therefore, not all marine objects are detected by all sensors of the marine vessel **125.**

In some embodiments, the first marine objects and the second marine objects are the same. This means that all sensors **130** have been able to detect the same marine objects.

The second position data is expressed in a referential which can depend on the sensor **115.**

For example, if sensor **115** is an AIS, absolute position (latitude, longitude in world coordinates) of the marine objects is obtained.

If sensor **115** is a radar, position of the marine object relative to the marine vessel **125** is obtained (expressed e.g., as a range and an angular position relative to the radar and/or marine vessel **125**).

According to some embodiments, the second data can include additional data (in addition to the second position data of the second marine objects).

According to some embodiments, the second data includes identification data of the second marine objects. For example, the AIS provides identification data specific to each object, which enables its identification.

According to some embodiments, the second data includes data informative of the type (e.g. type of marine vessel, etc.) of the marine object (which can be provided by sensor(s) **115** and/or which can be derived from data provided by sensor(s) **115**).

For example, the AIS can provide type of the marine object.

According to some embodiments, sensor **115** acquires data at a plurality of periods of time (e.g., while the marine vessel **125** is in motion). As a consequence, it is possible to obtain position over time of the second marine objects. As explained hereinafter, tracking data of the marine objects can be used to improve matching/association between the first and second marine objects. This is however not mandatory.

In particular, the method can include obtaining a set of second position data (operation **210₁ in** **Fig. 2B**). The set of second position data includes, for each given object of the second marine objects, position of the given object at the plurality of periods of time.

In order to track the second marine objects over the different acquisitions, several methods can be used.

In some embodiments, if sensor **115** provides identification data specific to each object, it is possible to track the object over the plurality of periods of time, thereby enabling generating the set of second position data. For example, if sensor **115** is an AIS, it is possible to track the position of the objects over time since each object is associated with specific identification data provided by the AIS.

If sensor **115** is a radar, the objects can be tracked over the various radar acquisitions (that is to say, at the plurality of periods of time), using regular radar tracking.

According to some embodiments, the first position data informative of a position of first marine objects (respectively, the set of first position data) corresponds to a position at a first period of time (respectively at a plurality of first periods of time), and the second data informative of a position of second marine objects (respectively the set of first position data) corresponds to a position at a second period of time (respectively at a plurality of second periods of time).

The first period of time (respectively first periods of time) and the second period of time (respectively second periods of time) meet a synchronization criterion. The synchronization criterion ensures that the time difference between the respective first period(s) of time and the respective second period(s) of time is below a threshold. For example, the synchronization criterion can ensure that a time difference between the respective first period(s) of time and the respective second period(s) of time is below 1 sec. This value is however not limitative. In particular, if the respective first period(s) of time and the respective second period(s) of time do not meet the synchronization criterion, it possible to perform up-sampling of the data provided by the sensors (using e.g. a Kalman filter - this is not limitative). Similarly, if necessary, down-sampling can be performed.

As a consequence, the first period(s) of time and the second period(s) of time are substantially identical.

The method further includes (operation **220**) using the first position data and the second position data to estimate data informative of at least one of a height or an orientation of the imaging device **120.** In some embodiments, both data informative of a height and an orientation of the imaging device is estimated, or only part of this data (e.g. because at least some of this data is already known, using e.g. other sensors and/or external input). Generally, at least one of the height and the orientation of the at least one imaging device is variable over time, since orientation and/or position of the marine vessel evolves over time.

Data informative of an orientation of the imaging device **120** includes at least one of a roll of the imaging device **120,** a pitch of the imaging device **120,** a yaw of the imaging device **120,** etc. This orientation can be expressed similarly as roll/pitch/yaw of a ship (for example, the roll axis is an imaginary line running horizontally through the length of the ship, through its centre of mass, and parallel to the waterline, the pitch axis is an imaginary line running horizontally across the ship and through its centre of mass, and the yaw axis is an imaginary line running vertically through the ship and through its centre of mass).

Data informative of a height (also called altitude or elevation) of the imaging device **120** can be also estimated. Height of the imaging device **120** can be expressed for example relative to sea level (also called mean sea level - MSL, or relative to still-water level - SWL).

As explained hereinafter, once one or more parameters of the imaging device **120** have been determined, additional position data (e.g. absolute position of the imaging device) can be determined.

As mentioned above, in some embodiments, position data of the marine objects at a plurality of periods of time is obtained.

According to some embodiments, the method can include using (operation **220₁** in **Fig. 2B**) the set of first position data (which includes position of the first marine objects at a plurality of periods of time derived from images acquired by the imaging device **120**) and the set of second position data (which includes position of the second marine objects at a plurality of periods of time derived from data acquired by sensor **115**) to estimate data informative of at least one of a height or an orientation of the imaging device **120** over time.

As explained hereinafter, estimating data informative of height and/or orientation of the imaging device **120** can include attempting to match position of the first marine objects and position of the second marine objects (in order to reflect the fact that they correspond to the same marine objects acquired by different sensors), by modifying value of the height and/or orientation of the imaging device **120** (which is to be estimated).

According to some embodiments, a filter (e.g. probabilistic filter) can be used which predicts the expected variations in orientation and/or height of the imaging device **120** (depending e.g. on the weather conditions). This is useful to filter out estimation of the height and/or orientation of the imaging device **120** which is not realistic and corresponds to noise.

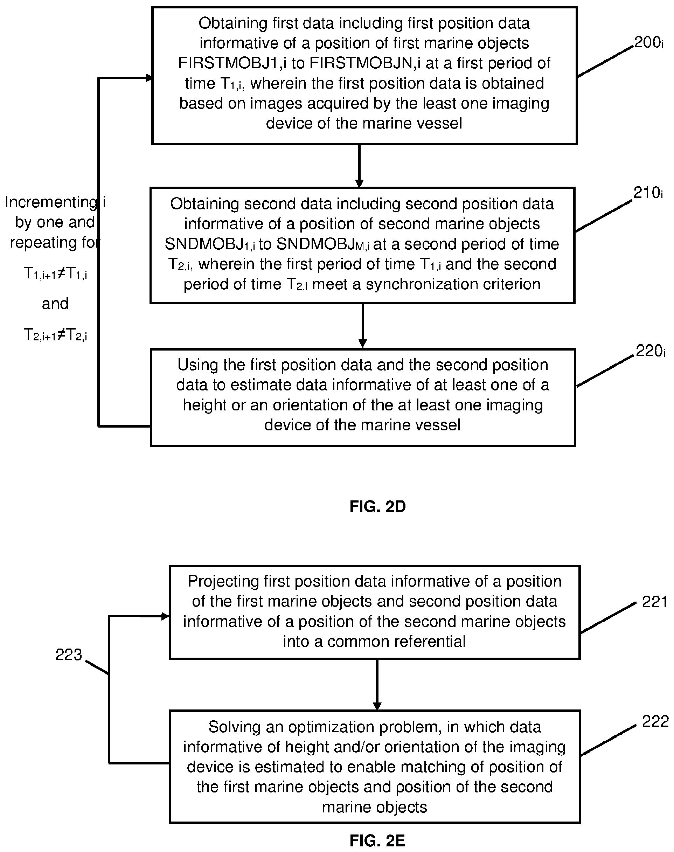

**Fig. 2D** illustrates a method in which data informative of at least one of a height or an orientation of the imaging device **120** of the marine vessel **125** is estimated over time. As shown in **Fig. 2D****,** the method is iterative over time.

The method includes obtaining (operation **200ᵢ**) first position data informative of a position of first marine objects FIRSTMOBJ_{1,i} to FIRSTMOBJ_{N,i} at a first period of time T_{1,i}, wherein the first position data is obtained based on images acquired by the imaging device 120 of the marine vessel **125.** Operation **200ᵢ** is similar to operation **200.**

The method includes obtaining (operation **210ᵢ**) second position data informative of a position of second marine objects SNDMOBJ_{1,i} to SNDMOBJ_{M,i} at a second period of time T_{2,i}, wherein the first period of time T_{1,i} and the second period of time T_{2,i} meet a synchronization criterion (see above a possible definition of this criterion). The second position data is obtained based on data acquired by the at least one sensor **115** of the marine vessel **125.** Operation **210ᵢ** is similar to operation **210.**

At least some of the first marine objects FIRSTMOBJ_{1,i} to FIRSTMOBJ_{N,i} are the same as at least some of the second marine objects SNDMOBJ_{1,i} to SNDMOBJ_{M,i}.

The method includes (operation **220ᵢ**) using the first position data and the second position data to estimate data informative of at least one of a height or an orientation of the imaging device **120** of the marine vessel **125.** Operation **220ᵢ** is similar to operation **220.** As a consequence, data informative of at least one of a height or an orientation of the imaging device **120** is estimated at a given period of time T'ᵢ, which substantially coincides with the first period of time T_{1,i} and the second period of time T_{2,i} (as mentioned the first period of time T_{1,i} and the second period of time substantially T_{2,i} coincide since they meet a synchronization criterion). In other words, T'ᵢ ≈ T_{1,i} ≈ T_{2,i}.

As shown in **Fig. 2D****,** operation **200ᵢ** is repeated at a different first period of time T_{1,i+1} (which occurs after T_{1,i} - i has been incremented by one in the flow chart of **Fig. 2D**). Therefore, at time T_{1,i+1}, first position data informative of a position of first marine objects FIRSTMOBJ_{1,i+1} to FIRSTMOBJ_{N,i+1} is obtained. It has to be noted that the first marine objects FIRSTMOBJ_{1,i+1} to FIRSTMOBJ_{N,i+1} of time Tᵢ₊₁ can differ from the first marine objects FIRSTMOBIJ_{1,i} to FIRSTMOBJ_{N,i} of time Tᵢ. This is however not mandatory, and depends on the scenario (in some cases, there is a partial overlap).

Operation **210ᵢ** is repeated at a different second period of time T_{2,i+1} (which occurs after T_{2,i}). Therefore, at time T_{2,i+1}, second position data informative of a position of second marine objects SNDMOBJ_{1,i+1} to SNDMOBJ_{M,i+1} is obtained. It has to be noted that the second marine objects SNDMOBJ_{1,i+1} to SNDMOBJ_{M,i+1} of time Tᵢ₊₁ can differ from the second marine objects SNDMOBJ_{1,i} to SNDMOBJ_{M,i} of time Tᵢ. This is however not mandatory, and depends on the scenario (in some cases, there is a partial overlap).

T_{1,i+1} and T_{1,i+1} meet a synchronization criterion.

At least some of the first marine objects FIRSTMOBJ_{1,i+1} to FIRSTMOBJ_{N,i+1} are the same as at least some of the second marine objects SNDMOBJ_{1,i+1} to SNDMOBJ_{M,i+1}.

Operation **220ᵢ** is repeated in order to estimate data informative of at least one of a height or an orientation of the at least one imaging device of the marine vessel. As a consequence, data informative of at least one of a height or an orientation of the imaging device **120** is estimated at a given period of time T'ᵢ₊₁, which substantially coincides with the first period of time T_{1,i+1} and the second period of time T_{2,i+1} (as mentioned the first period of time T_{1,i+1} and the second period of time substantially T_{2,i+1} coincide since they meet a synchronization criterion). In other words, T'ᵢ₊₁ ≈ T_{1,i+1} ≈ T_{2,i+1}.

The method therefore enables to estimate at least one of a height or an orientation of the imaging device **120** over time.

According to some embodiments, height and/or orientation of the imaging device **120** is estimated in real time or quasi real time (a small delay can be present due to the time for the sensors of the marine vessel to acquire the data and the time for processing this data).

Assume that data informative of at least one of a height or an orientation of the imaging device **120** is estimated at a given period of time (corresponding to a given iteration i of the method of **Fig. 2D**). In some embodiments, this data can be used to improve estimation of at least one of a height or an orientation of the imaging device **120** at a subsequent period of time (corresponding to a given iteration i+1 of the method of **Fig. 2D**). For example, the estimation obtained at iteration i can be used as a starting point of the algorithm which attempts to estimate the height and/or orientation at iteration i+1. In other words, results of a previous iteration can be used to improve estimation at a subsequent iteration.

In some embodiments, and as explained hereinafter, estimation of the height and/or orientation of the imaging device **120** includes determining an association or match between the first marine objects and the second marine objects at a given iteration. The association determined at a given iteration "i" of the method can be reused as an input of the method at a subsequent iteration "i+1" (or more generally at an iteration "j", with j>i), to improve determination of the association at the subsequent iteration. For example, as explained hereinafter, if two given marine objects have been identified as matching at a previous iteration of the method of **Fig. 2D****,** a term (reward) can be introduced in a loss function (calculated at a subsequent iteration of the method - see hereinafter embodiments which rely on a loss function) which takes into account this information.

**Fig. 2E** illustrates an embodiment of a method of which can be used to perform operation **220** or operation **220₁** or operation **220ᵢ**.

As shown in **Fig. 2E****,** the method includes projecting **(221)** first position data informative of a position of the first marine objects and second data informative of a position of the second marine objects into a common referential.

Although **Fig. 2E** depicts a sequence in which the first position data is first projected, and then the second position data, this is not limitative and this could be performed in the opposite way, or simultaneously.

The common referential can correspond e.g. to a global/absolute referential such as world coordinates (latitude, longitude). This is not limitative and other referentials can be used. For example, a predefined set of coordinates which share the same plane can be used (for example the set of coordinates is expressed relative to the marine vessel's position, which is selected as the origin of the set of coordinates).

As explained above, the first position data is generally expressed in the referential of the image (referential of the imaging device **120**).

In order to convert the first position data into the common referential, an assumption on the data informative of the height and/or orientation of the imaging device **120** can be made.

Based on this assumption, and the known position of the first marine objects in the referential of the image(s) acquired by the imaging device **120,** it is possible to project the first position data from the referential of the image into the common referential.

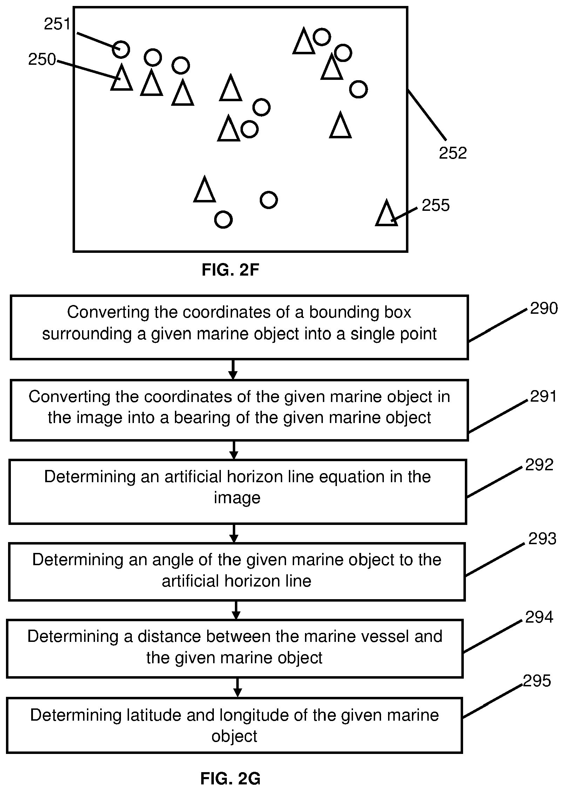

A method of projecting the first position data into the common referential is described hereinafter with reference to **Fig. 2G****.**

In some embodiments, at least some of the position data is already expressed in the common referential.

For example, an AIS may provide position data in world coordinates.

If position data is provided by a radar, it is possible to convert the position data in world coordinates by using the position of the marine vessel **125.** Indeed, since the radar provides relative position (range/bearing), and the position of the marine vessel **125** is known (using e.g. a localization system such as GPS/AIS of the marine vessel **125**), it is possible to project the position data into world coordinates (or into another common referential).

**Fig. 2F** illustrates a projection of the first position data and the second position data into a common referential **252** (global/absolute referential, such as Earth referential).

Projection of the first position data into the common referential **252** depends *inter alia* on the height and orientation of the imaging device **120.**

At this stage, since height and/or orientation of the imaging device **120** is unknown (or known with an error), the first position data is projected randomly, and therefore position of the first marine objects (depicted as triangles) does not match position of the second marine objects (depicted as circles).

**Fig. 2G** illustrates a method of projecting the first position data from the referential of the image into a common referential (global/absolute referential - independent of the referential of the image).

It has to be noted that this method is not limitative and is provided as an example only.

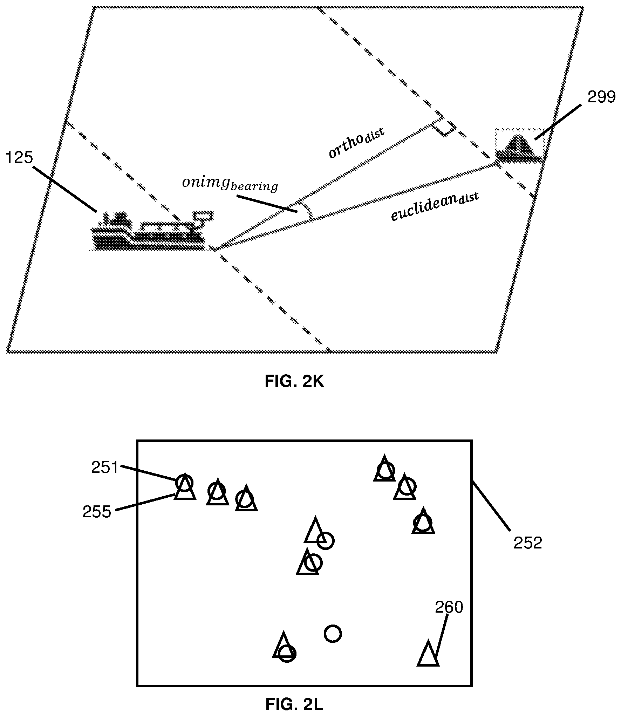

Assume that a given marine object **299** (depicted in **Fig. 2K**) has been identified in an image acquired by the imaging device **120.**

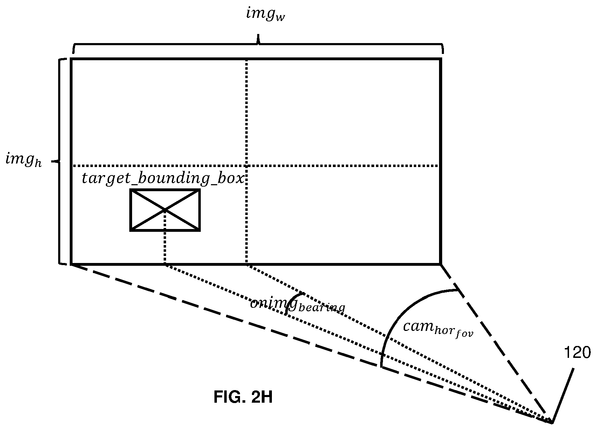

For example, a bounding box (see **Fig. 2H****,** *"target_bounding_box")* including the given marine object **299** is obtained. Assume the following notations:
i. *(left_{upperₓ}, leftt_{upper_{y}})* correspond to the coordinates of the left upper point of the bounding box (in the image);
ii. (*right_{bottomₓ}, right_{bottom_{y}})* correspond to the coordinates of the right lower point of the bounding box (in the image);
iii. *cam_{vert_{fov}}, cam_{hor_{fov}}* correspond respectively to the imaging device vertical field of view and to the imaging device horizontal field of view;
iv. *img,* and *imgₕ* correspond to the image resolution (width by height);
v. *camₗₐₜ, cam_{long}* correspond respectively to the latitude and longitude of the imaging device **120;**
vi. *cam_{height}* corresponds to the height of the imaging device **120,** relative to sea level (it is assumed that the marine vessel **125** and the given marine object are located at the same water surface);
vii. *cam_{pitch}, camᵣₒₗₗ* and *cam_{yaw}* correspond respectively to the pitch of the imaging device **120,** the roll of the imaging device **120** and the yaw of the imaging device **120** (it is generally assumed that the imaging device **120** and the marine vessel **125** form a rigid body); and
viii. *tar gₗₐₜ* and *tar gₗₒₙ* correspond respectively to the latitude of the given marine object and the longitude of the given marine object;

Parameters (i) to (vii) are the input of the method, and parameter (viii) is an output of the method.

The method includes converting (operation **290**) the coordinates of the two extremities of the bounding box into a single point, with coordinates *(targetₓ, target_{y}).* ${target}_{x} = \frac{{left}_{{upper}_{x}} - {right}_{{bottom}_{x}}}{2}$ ${target}_{y} = \frac{{left}_{{upper}_{y}} - {right}_{{bottom}_{y}}}{2}$

The method includes converting **(291)** the coordinates *(targetₓ, target_{y})* of the given marine object into a bearing (noted *global_bearing)* of the given marine object expressed in an absolute referential (e.g. Earth referential), as detailed hereinafter. $\begin{matrix}{left}_{{img}_{angle}} = - \frac{cam _ hor _ fov}{2} \\ {right}_{{img}_{angle}} = \frac{cam _ hor _ fov}{2}\end{matrix}$ ${onimg}_{bearing} = \frac{\left({target}_{x}\left({right}_{{img}_{angle}}-{left}_{{img}_{angle}}\right)\right)}{{img}_{w}} + {left}_{{img}_{angle}}$ ${global}_{bearing} = \left({onimg}_{bearing}+{cam}_{yaw}+360\right) mod \left(360\right)$

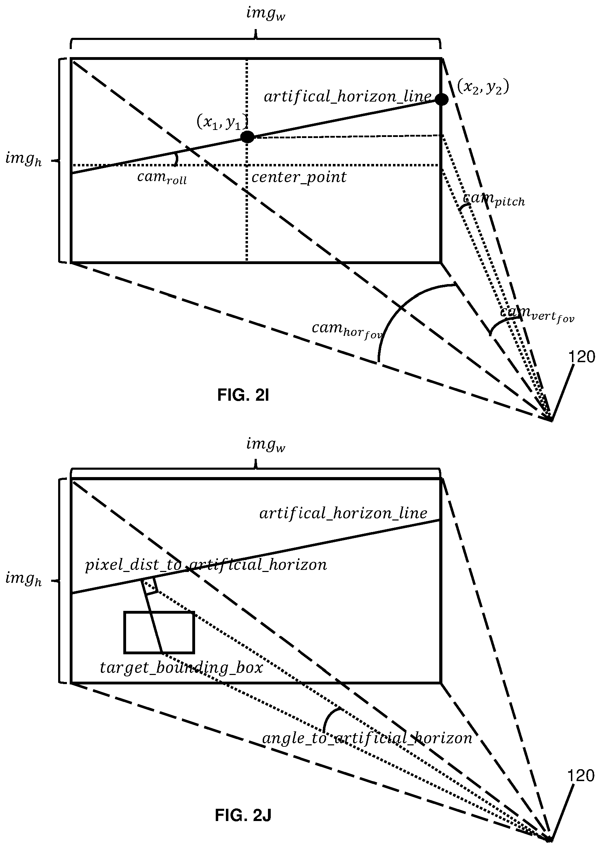

The method further includes **(292)** determining an artificial horizon line equation in the image (the artificial horizon line corresponds to a reference for which the imaging device **120** has zero roll and zero pitch). **Fig. 2I** illustrates a non-limitative example of an artificial horizon line and some of the parameters which are used to determine its equation.

A normalization function *old_to_new_value(oldᵥₐₗᵤₑ, old_{range}, new_{range})* is defined, in which *oldᵥₐₗᵤₑ* is the value that needs to be normalized, *old_{range}* corresponds to the current range *(oldₘᵢₙ, oldₘₐₓ), new_{range}* corresponds to the expected value range *(newₘᵢₙ, newₘₐₓ)* and *newᵥₐₗᵤₑ* corresponds to the output of the function. The function *old_to_new_value* can be defined as follows: ${new}_{value} = \left(\frac{\left(\left({old}_{value}-{old}_{min}\right)\left({new}_{max}-{new}_{min}\right)\right)}{{old}_{max} - {old}_{min}}\right) + {new}_{min}$

Operation **292** can include setting *cam_{pitch}* as the output of *old_to_new_value(cam_{pitch},* (-90,90), (0,180)).

Operation **292** can further include calculating the artificial horizon line location in the image in pixels.

This can include determining *pixel_{pitch}* as follows: ${pixel}_{pitch} = old _ to _ new _ value \left({cam}_{pitch}, \left(\begin{matrix}90 - \frac{{cam}_{{vert}_{fov}}}{2} , 90 + \\ \frac{{cam}_{{vert}_{fov}}}{2}\end{matrix}\right), \left(0, {img}_{h}\right)\right) .$

This can further include updating *pixel_{pitch}* as follows: ${pixel}_{pitch} = abs \left(cos\left({cam}_{roll}\right)\right) {pixel}_{pitch} .$

This can further include defining *(x₁, y₁)* as follows: $\left({x}_{1}, {y}_{1}\right) = \left(\frac{{img}_{w}}{2}, {pixel}_{pitch}\right)$ $\begin{matrix}\left({x}_{1}, {y}_{1}\right) corresponds to a first point of the artificial horizon line \left(see Fig.2I\right) . \\ This can further include defining \left({x}_{2}, {y}_{2}\right) as follows : \\ \left({x}_{2}, {y}_{2}\right) = \left(\frac{{img}_{w}}{2}, 0\right) , if {cam}_{pitch} = 90 ;\end{matrix}$ $\left({x}_{2}, {y}_{2}\right) = \left(\frac{{img}_{w}}{2}, {y}_{1}\right) , if {cam}_{pitch} = 0 or 180 ;$ $\left({x}_{2}, {y}_{2}\right) = \left(\frac{{img}_{w}}{2}, \frac{\left({y}_{1}+{img}_{w}tan\left({cam}_{roll}\right)\right)}{2}\right) ,$ for other values of *cam_{pitch}.*

*(x₂,* y₂) corresponds to a second point of the artificial horizon line (see **Fig. 2I**).

The equation of the artificial horizon line can be calculated using (x₁, y₁) and *(x₂, y₂).*

The method further includes **(293)** determining an angle (noted *angle_to_artificial_horizon)* of the given marine object with respect to the artificial horizon line (see **Fig. 2J**). Operation **293** can include determining a distance (see **Fig. 2J****,** *pixel _dist_to_artificial_horizon)* in pixels in the image between the bounding box of the given marine object (see **Fig. 2J****,** *target_bounding_box)* and the artificial horizon line (this can be performed by simple trigonometry calculation). Operation **293** can then include determining *angle_to_artificial_horizon* using the following computation: ${angle}_{{per}_{pixel}} = \frac{{cam}_{{vert}_{fov}}}{{img}_{h}}$ $\begin{matrix}angle _ to _ artificial _ horizon = \\ pixel _ dist _ to _ artificial _ horizon * {angle}_{{per}_{pixel}}\end{matrix}$

The method further includes **(294)** determining a distance (Euclidean distance, noted *euclidean_{dist})* between the marine vessel **125** and the given marine object **299,** as detailed hereinafter. Operation **294** can include a preliminary step of determining an ortho distance (see **Fig. 2K** - noted hereinafter *ortho*_*dist)* between the marine vessel **125** and the given marine object **299.** ${ortho}_{dist} = tan \left(90-angle_to_artificial_horizon\right) {cam}_{height}$

In some embodiments, *ortho_{dist}* can be corrected to take into account curvature of the Earth (see e.g. https://earthcurvature.com).

Operation **294** can then include performing the computation: ${euclidean}_{dist} = \frac{{ortho}_{dist}}{cos \left(abs\left({onimg}_{bearing}\right)\right)}$

The method further includes **(295)** determining absolute coordinates (latitude, longitude) of the given marine object **299.** Operation **295** can include the following computation: ${targ}_{lat} = arcsin \left(sin\left({cam}_{lat}\right)cos\left(\frac{d}{R}\right)+cos\left({cam}_{lat}\right)sin\left(\frac{d}{R}\right)cos\left(bearing\right)\right)$ $\begin{matrix}{targ}_{lon} = {targ}_{lat} \\ + atan 2 \left(\begin{matrix}cos \left(\frac{d}{R}\right) \\ - sin \left({cam}_{lat}\right) sin \left({targ}_{lat}\right) , sin \left(b\right) sin \left(\frac{d}{R}\right) cos \left({cam}_{lat}\right)\end{matrix}\right)\end{matrix}$

In this equation, d is equal to *euclidean_{dist}, R* is the Earth's radius and b is equal to *global_{bearing}.*

The method of **Fig. 2E** further includes (operation **222**) solving an optimization problem. In particular, data D_{camera} informative of a height and/or an orientation of the imaging device **120** is estimated to enable matching of position of at least some of the first marine objects determined using D_{camera} and the first position data, and second position data of at least some of the second marine objects. If D_{camera} is changed, projection of the first marine objects from the referential of the image (first position data) into the common referential **252** is changed (as visible in the equations provided above with reference to **Figs. 2G to 2K** - see parameters *cam_{pitch}, camᵣₒₗₗ, cam_{yaw}* and *cam_{height}).*

This matching can be according to a criterion (as explained hereinafter, the criterion can define e.g. a number of iterations of the method and/or a minimal value for a loss function).

As mentioned above, modification of an estimation of the height and/or orientation of the imaging device **120** ("D_{camera}") induces that a projection of the position of the first marine objects from the referential of the image (first position data) into the common referential **252** is modified. Modification of D_{camera} does not affect the projection of the position of the second marine objects acquired by other sensors into the common referential **252.**

Solving the optimization problem can include optimizing the estimation D_{camera} of the height and/or orientation of the imaging device **120** to optimize a matching between the position of the first marine objects (as recalculated using D_{camera} and the first position data) and the position of the second marine objects in the common referential. In particular, it is attempted to match between a position of a first marine object and a position of a second marine object which correspond to the same marine object.

In some embodiments, it is possible to estimate additional parameters of the imaging device **120,** such as the field of view (data D_{field_of_view}, such as *cam_{vert_{fov}}* and *cam_{hor_{fov}})* of the imaging device **120.** Although the field of view of the imaging device is generally known, there can be a distortion which can be estimated.

In this case, solving the optimization problem can also include optimizing the values of the field of view to optimize a matching between the position of the first marine objects (as recalculated using D_{camera}, D_{field_of_view} and the first position data) and the position of the second marine objects in the common referential.

As visible in **Fig. 2E****,** the method is generally iterative (see reference **223**)**.** In other words, solving the optimization problem can include various iterations (e.g. N iterations, with N>1), in which at each iteration D_{camera} (and/or D_{field_of_view}) is refined to optimize a loss function, until a convergence criterion is met. In some embodiments, the convergence criterion can define a number of iterations, a value to be reached for the loss function, etc.

In some embodiments, the convergence criterion depends on the number (e.g., absolute number or ratio) of associations/matching that have been performed between the first marine objects and the second marine objects. Indeed, the higher the number associations/matching between the first marine objects and the second marine objects, the higher the prospects that an optimal solution to the optimization problem has been found (and the better the estimation of the orientation and/or height of the imaging device).

At each iteration, it is attempted to improve the estimation of the height and/or orientation of the imaging device **120,** such that the matching between the position of the first marine objects and the position of the second marine objects in the common referential is improved.

Iteration of the method can include repeating operations **221** and **222.**

**Fig. 2L** illustrates a projection of the first position data and the second position data into a common referential **252,** after N iterations of the method.

As shown, the first marine object which had an initial position **250** at the first iteration of the method, has an optimized position **255** (after N iterations of the method) which matches the position **251** of a second marine object.

Similarly, a plurality of respective first marine objects has an optimized position which now matches the position of a plurality of the respective second marine objects.

However, there can be one or more first marine objects which do not match any of the second marine objects. In **Figs. 2F** and **2L****,** the first marine object which has position **255** at the first iteration of the method, has an optimized position **260** after N iterations of the method, which does not match any position of the second marine objects. This can be due to the fact that this marine object has been acquired only by the imaging device **120** (and not by other sensors **115**), or to various factors such as noise, etc.

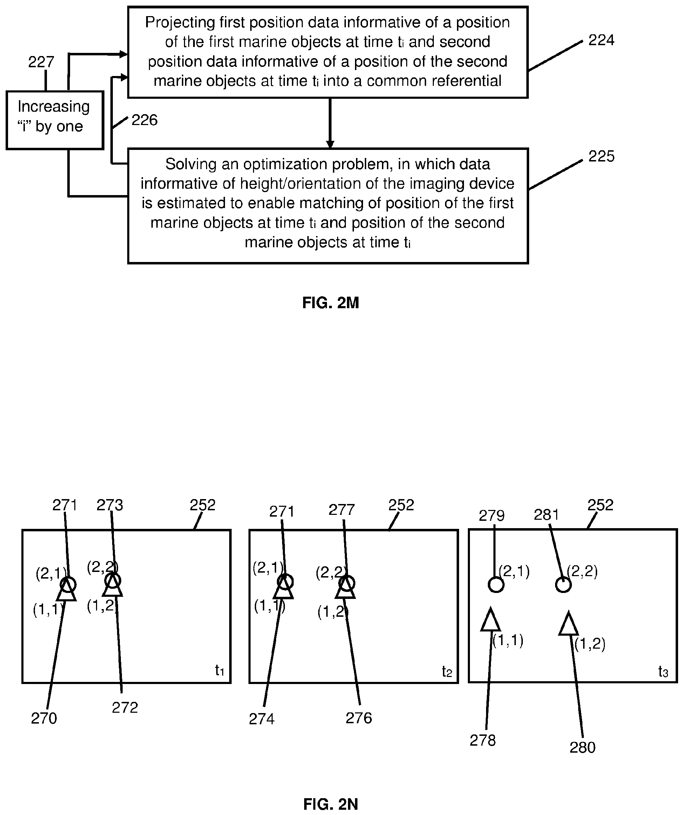

Attention is drawn to **Fig. 2M****.**

As explained above (see **Fig. 2B** or **Fig. 2D**), in some embodiments, position of the first marine objects and of the second marine objects is obtained at a plurality of periods of time (set of first position data and set of second position data). This can be used to improve estimation of the height and/or orientation of the imaging device **120.**

Assume that first position data and second position are obtained for time tᵢ.

The method of **Fig. 2M** includes projecting (operation **224**) first data informative of a position of the first marine objects at time tᵢ and second data informative of a position of the second marine objects at time tᵢ into a common referential. Operation **224** is similar to operation **221.**

The method further includes solving (operation **225**) an optimization problem, in which data D_{camera} informative of height and/or orientation of the imaging device **120** (and/or data D_{field_of_view}) is estimated to enable matching of position of the first marine objects at time tᵢ (as recalculated using D_{camera} and the first position data) and the second position data of the second marine objects at time tᵢ.

Operation **225** is similar to operation **222.**

For position data of time tᵢ, the method of **Fig. 2M** can be repeated iteratively (see reference **226**), until a convergence criterion is met. Therefore, an estimation of the height and/or orientation of the imaging device **120** is obtained for time tᵢ.

The method can be performed again (see reference **227**) at time tᵢ₊₁ (different from time tᵢ). At time tᵢ₊₁, position of the first and/or second marine objects may evolve in the common referential.

Estimation of the height and/or orientation of the imaging device **120** of time tᵢ is not necessarily valid for time tᵢ₊₁, because height and/or orientation of the imaging device **120** can change during the voyage of the marine vessel **125** (due to various factors mentioned above).

Therefore, the method can include performing operations **224** and operations **225** (these operations can be performed iteratively as depicted in reference **226**), in order to estimate height and/or orientation of the imaging device **120** at time tᵢ₊₁.

In some embodiments, it is possible to use tracking of the marine objects over time to improve matching between the first marine objects and the second marine objects. In particular, if it has been determined that there is a matching between two given objects (a given object of the first marine objects and a given object of the second marine objects) at different periods of time, there is a high likelihood that the two given objects correspond to the same marine object. Therefore, at subsequent periods of time during which it is attempted to match position of the first marine objects and position of the second marine objects (operation **225**), matching of the two given objects should be assigned with a high weight in the optimization problem. This can be performed by introducing a term (reward) in the loss function which takes into account this information.

A non-limitative example is provided with reference to **Fig. 2N****.**

Assume that at time t₁ (after e.g. a plurality of iterations of the method - as depicted in reference **226**), position **270** of a first marine object with tracking ID (1,1) matches a position **271** of a second marine object with tracking ID (2,1), and position **272** of a first marine object with tracking ID (1,2) matches a position **273** of a second marine object with tracking ID (2,2) in a common referential **252.**

Assume that at time t₂ (after e.g. a plurality of iterations of the method), position **274** of a first marine object with tracking ID (1,1) matches a position **271** of a second marine object with tracking ID (2,1), and position **276** of a first marine object with tracking ID (1,2) matches a position **277** of a second marine object with tracking ID (2,2) in the common referential **252.**

At time t₃, at the first iteration of the method, a first marine object has position **278** and tracking ID (1,1), another first marine object has position **280** and tracking ID (1,2), a second marine object has position **279** and tracking ID (2,1) and another second marine object has position **281** and tracking ID (2,2).

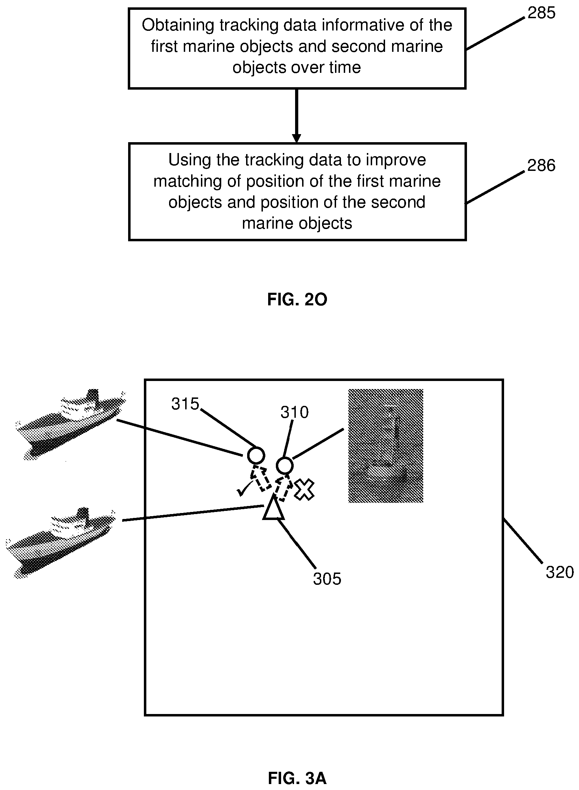

When trying to match the positions of the first marine objects and the second marine objects (operation **225**), it is possible to take into account the tracking IDs (as illustrated in operations **285** and **286 of** **Fig. 2O**). Indeed, it has been established at time t₁ and time t₂ that the first marine object with tracking ID (1,1) corresponds to the second marine object with tracking ID (2,1). Similarly, it has been established at time t₁ and time t₂ that the first marine object with tracking ID (1,2) corresponds to the second marine object with tracking ID (2,2).

Therefore, at time t₃, data informative of the height and/or orientation of the imaging device **120** can be estimated to attempt to match position of the first marine object with tracking ID (1,1) with position of the second marine object with tracking ID (2,1), and to attempt to match position of the first marine object with tracking ID (1,2) with position of the second marine object with tracking ID (2,2) (since there is a high likelihood that these respective positions correspond to the same respective marine object).

Matching of the first and second marine objects relies therefore not only on position, but can rely also on tracking data of the first and second marine objects over time (and/or other parameters as described hereinafter).

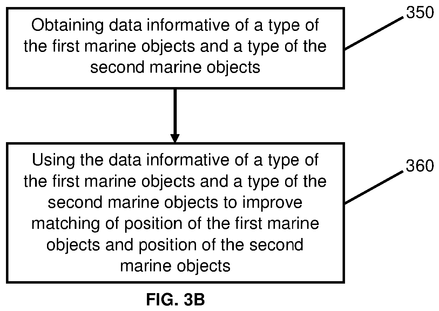

Attention is drawn to **Figs. 3A** and **3B****.**

As mentioned above, in some embodiments, the first data informative of the first marine objects and the second data informative of the second marine objects include data informative of a type of the marine objects.

This can be used to improve matching between the first marine objects and the second marine objects.

Indeed, if it is known that two marine objects correspond to the same type of objects, a higher weight should be assigned in the optimization problem to match these two marine objects (at operations **222** or **225**). This can be performed by introducing a term (reward) in the loss function which takes into account this information.

To the contrary, if two marine objects correspond to different types of objects, a low weight should be assigned in the optimization problem to match these two marine objects (at operations **222** or **225**)**.** This can be performed by introducing a term (penalty) in the loss function which takes into account this information.

A non-limitative example is shown in **Fig. 3A****.**

Assume that a first marine object has a position **305** in the common referential **320.** The first data includes type of objects and indicates that the first marine object is a marine vessel.

Assume that a second marine object has a position **315** in the common referential **320.** The second data indicates that this second marine object is a marine vessel.

Assume that another second marine object has a position **310** in the common referential **320.** The second data indicates that this second marine object is a buoy.

Although position **305** of the first marine object is closer to position **310** of a second marine object than to position **315** of another second marine object, the method should estimate data informative of height and/or orientation of the imaging device **120** to improve matching between position **305** of the first marine object and position **315** of a second marine object, since these two marine objects both correspond to a marine vessel (whereas the second marine object with position **310** corresponds to a buoy, which is a different marine object).

This is shown in operations **350** and **360** of **Fig. 3B** which illustrates using data informative of a type of the first marine objects and a type of the second marine objects to improve matching between position of the first marine objects and position of the second marine objects.

More generally, the method can use various parameters or additional input which can assist in improving the matching (or association) between the first marine objects and the second marine objects.

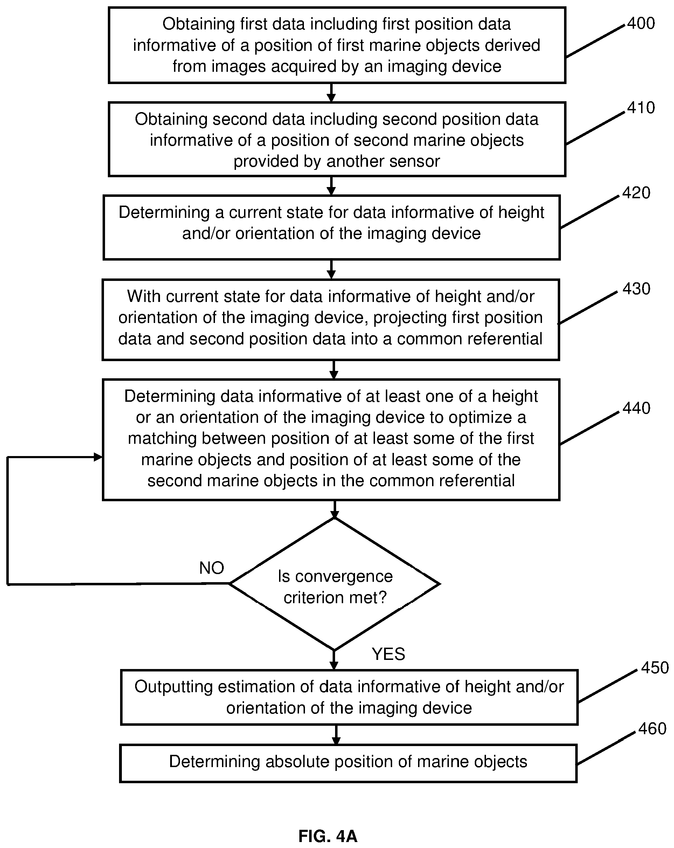

Attention is now drawn to **Fig. 4A****,** which depicts a particular embodiment of the method of **Fig. 2A****.**

The method includes obtaining (operation **400**) first data including first position data informative of a position of first marine objects derived from images acquired by the imaging device **120.** Operation **400** is similar to operation **200.**

The method includes obtaining (operation **410**) second data including second position data informative of a position of second marine objects provided by another sensor **115.** Operation **410** is similar to operation **210.** This other sensor is different from the imaging device **120,** and is generally a sensor which is not a camera.

As mentioned above, at least some of the first marine objects and the second marine objects correspond to the same marine objects.

The method further includes determining (operation **420**) a current state for data informative of height and/or orientation of the imaging device **120.**

At the first iteration of the method, the exact height and/or orientation of the imaging device **120** is unknown. Therefore, operation **420** can include generating a random value for the height and/or orientation of the imaging device **120.**

In some embodiments, a first estimation of the height and/or orientation of the imaging device **120** can be available. This first estimation can be provided e.g. by an operator and/or a manufacturer who can have first knowledge on the height and/or orientation of the imaging device **120** (e.g. due to the fact that they installed the imaging device **120** on the marine vessel **125**)**.** However, due to various factors mentioned above, this first estimation is no longer exact during voyage of the marine vessel **125,** and therefore parameters of the imaging device **120** need to be estimated.

In some embodiments, a first estimation of the height and/or orientation of the imaging device **120** can be provided by an operator located on the marine vessel **125,** who measures a first value of the height and/or orientation of the imaging device **120.**

Once a current state is available for the height and/or orientation of the imaging device **120,** first position data of the first marine objects can be projected (operation **430**) into a common referential (e.g. Earth referential - this is however not limitative). An example of this projection is provided in **Fig. 2G****.**

Similarly, the second position data can be projected into the common referential, as already explained above.

The method further includes (operation **440**) determining data informative of at least one of a height or an orientation of the imaging device to optimize a matching between position of at least some of the first marine objects and position of at least some of the second marine objects. Examples of an optimization algorithm that can be used include e.g. MSE (Mean Square error), gradient descent, MAE (mean average error), min L2 distance (Euclidean distance), etc. These examples are not limitative.

As mentioned above, operation **440** can include using various additional data to improve matching between the first marine objects and the second marine objects, such as type of marine object, tracking data of marine objects, etc.

A loss function can be calculated to reflect the optimization problem. If the loss function does not meet a convergence criterion (e.g. because its value is above a threshold), the method can be repeated, by repeating operation **440,** in which it is attempted to improve estimation of the height and/or orientation of the imaging device **120,** in order to improve a match between the loss function and the convergence criterion.

When the loss function of the optimization algorithm meets a convergence criterion (e.g. its value is below a threshold and/or a sufficient number of iterations has been performed), the current state (current estimation) of the height and/or orientation of the imaging device **120** can be output (operation **450**). Similarly, the matching between the first marine objects and the second marine objects can be also output, for further usage, as explained hereinafter (for example, two marine objects acquired by different sensors can be considered as matching when their position in the common referential, as determined using the estimated height/orientation of the imaging device, is substantially similar, or their distance is below a threshold).

According to some embodiments, the method of **Fig. 4A** includes obtaining first data including first position data informative of a position of first marine objects derived from images acquired by an imaging device **120,** second data including second position data informative of a position of second marine objects provided by a first sensor (see reference **115**) and third data including third position data informative of a position of third marine objects provided by a second sensor (see reference **115**). The first sensor and the second sensor are not imaging devices, and the first sensor can be of a different type than the second sensor. At least some of the first marine objects, the second marine objects and the third marine objects correspond to the same marine objects acquired by different sensors. In this example, the method of **Fig. 4A** can be performed similarly by projecting positions of all marine objects within a common referential (similar to operation **430**) and attempting to determine height and/or orientation of the imaging device **120** which optimize a match between the respective positions of the first, second and third marine objects in the common referential. For example, the height and/or orientation of the imaging device is modified to force the projected position of each of the first marine objects to match, as much as possible, the position of at least one of the second and third marine objects.

It can happen that for a given marine object, it is detected only e.g. by the imaging device and the first sensor, and for another marine object, it is detected only by the first and the second sensors, or only by the imaging device and the second sensor.

As explained hereinafter, once the height and/or orientation of the imaging device **120** is estimated, this data can be used for different marine applications.

According to some embodiments, and as shown in **Fig. 4A****,** assume that a matching between a given marine object of the first marine objects and a given marine object of the second marine objects has been found (as mentioned above, in some embodiments, this matching can be obtained after several iterations of the optimization method).

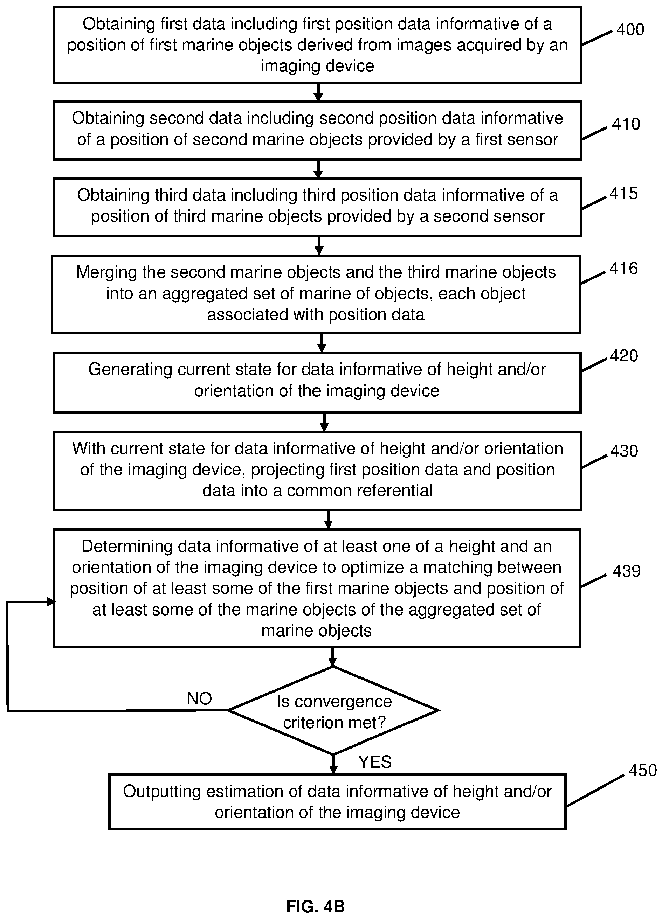

In other words, this indicates that this given marine object has been identified as the same marine object acquired both by the imaging device **120** and another sensor **115.** Therefore, if the other sensor **115** provides second position data informative of the given marine object (e.g. expressed in a global/ absolute referential, such as a world referential - for example, sensor **115** is an AIS), it is possible to determine (operation **460**) position of the given marine object acquired by the imaging device **120** using the second position data. Attention is now drawn to **Fig. 4B****,** which depicts a variant of the method of **Fig. 4A****.**

The method includes obtaining (operation **400**) first data including first position data informative of a position of first marine objects derived from images acquired by an imaging device **120.** Operation **400** is similar to operation **200.**

The method includes obtaining (operation **410**) second data including second position data informative of a position of second marine objects provided by a first sensor (see reference **115**). Operation **410** is similar to operation **210.** This first sensor is different from the imaging device **120** and is generally a sensor which is not a camera.

The method includes obtaining (operation **415**) third data including third position data informative of a position of third marine objects provided by a second sensor (see reference **115**)**.**

The second sensor is different from the first sensor and from the imaging device **120.** According to some embodiments, the second sensor is not a camera.

According to some embodiments, the second sensor is of a different type than the first sensor (e.g. the first sensor is an AIS and the second sensor is a radar or a LIDAR - this is not limitative).

The method can include an intermediate operation **416,** in which at least some of the second marine objects and at least some of the third marine objects are merged, to obtain an aggregated (unified) set of marine objects. This operation is however not limitative.

Each marine object of the aggregated set of marine objects is assigned with position data, which can correspond e.g. to the second position data and/or to the third position data.

Operation **416** can be performed by merging marine objects for which a distance between their positions (in a common referential) is below a threshold, and/or is minimal.

Operation **416** can include solving an optimization problem, in which it is attempted to find pairs of marine objects (each pair including a marine object of the second marine objects and a marine object of the third marine objects), such that the distance between marine objects of each pair is minimized. Optimization algorithms mentioned above can be used.

For example, assume that the first sensor is an AIS and the second sensor is a radar. An AIS provides latitude/longitude of the second marine objects, and it is possible to use the relative range/bearing measurements of the radar and position of the marine vessel **125** to determine latitude/longitude of the third marine objects. Therefore, it is possible to merge the second marine objects and the third marine objects into an aggregated set of marine objects.

Although the method of **Fig. 4B** is depicted with two sensors (in addition to the imaging device **120**), this is not limitative, and any adapted additional sensors (which provide information on position of marine objects surrounding the marine vessel) can be used.

The method further includes, similarly to **Fig. 4A****,** determining (operation **420**) current state for data informative of height and/or orientation of the imaging device **120.**

With the current state for data informative of height and/or orientation of the imaging device, the method includes projecting (operation **430**) first position data into a common referential (e.g. an absolute referential, such as Earth referential).

Regarding the position data of the aggregated set of marine objects, in some embodiments, this position data is already expressed in the common referential. Indeed, if at least one given sensor (among the first sensor and the second sensor) provides position data in the common referential, then after merging of the second and third marine objects into an aggregated set of marine objects (see operation **416**), it is possible to assign, to each object of the aggregated set of marine objects, position data in the common referential, as provided by the given sensor.

The method further includes determining (operation **439**) data D_{camera} informative of a height and/or an orientation of the imaging device **120** to optimize a matching between position of at least some of the first marine objects determined using D_{camera} and the first position data and position of at least some of the marine objects of the aggregated set of marine objects. Operation **439** is similar to operation **440** but differs in that operation **439** includes matching between the first marine objects and the aggregated set of marine objects (obtained using at least two sensors). In some embodiments, operation **439** can include determining D_{field_of_view}.

The method can be iterated (e.g., operation **439** can be repeated to fine tune the estimation of D_{camera}) until a convergence criterion is met and there is a match between the loss function and the convergence criterion.

Once the convergence criterion is met, an estimation of the height and/or orientation of the imaging device **120** can be output (see operation **450**).

As explained hereinafter, once the height and/or orientation of the imaging device **120** is estimated, this data can be used for different marine applications.

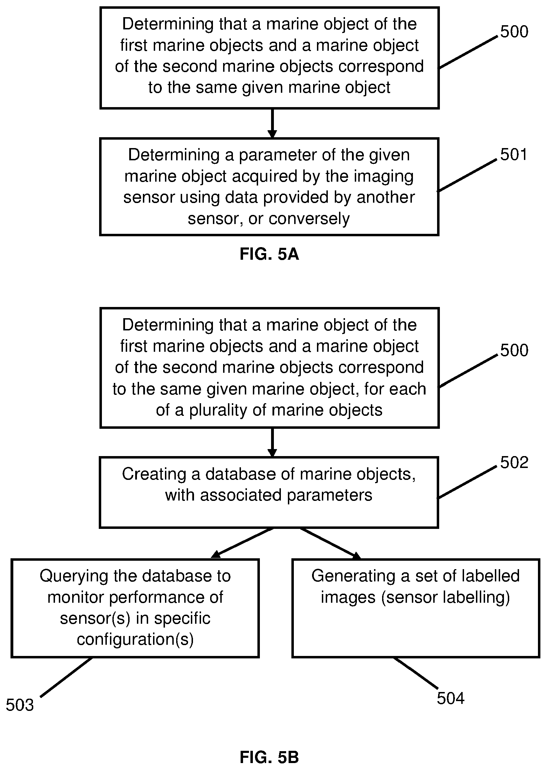

Attention is now drawn to **Fig. 5A****.**

As explained in the various embodiments above, a matching can be performed between position of the first marine objects (acquired by the imaging device **120**) and position of the second (or even third, or more) marine objects (acquired by other sensors **115**).

Once this matching has been performed, it is known that a marine object of the first marine objects and a marine object of the second marine objects correspond to the same given marine object, acquired both by the imaging device **120** and the sensor(s) **115** (since their positions are substantially identical, or with a difference below a threshold). In other words, an association (operation **500**) between the first marine objects and the second marine objects has been performed.

In order to augment knowledge of the given marine object, it is possible to use this association and the various parameters provided by the different sensors.

In particular, it is possible to determine (operation **501**) a parameter of the given marine object, which cannot be determined using (only) the imaging device **120** but can be determined using another sensor **115** which has detected this given marine object (since it is known that the respective acquisitions by the imaging device and the at least one sensor **115** correspond to the same physical object).

Conversely, it is possible to determine a parameter of the given marine object, which cannot be determined using (only) a sensor **115** but can be determined using the imaging device **120** which has detected this given marine object (since it is known that the respective acquisitions by the imaging device and the at least one sensor **115** correspond to the same physical object).

For example, the AIS provides a type (e.g. "cargo") of a given marine object. However, this information can be corrupted, since it is provided by the marine object itself. The imaging device can be used to determine the true type of the given marine object (using e.g., a deep neural network which detects the type of the object based on the image).

A set of augmented data/parameters can be determined for each marine object.

As a consequence, a database of marine objects (with corresponding augmented data/parameters) can be created (see operation **502**) and queried, for various purposes, as explained hereinafter.

Assume that it desired to monitor performance of detection of the imaging device (or of another sensor). For each marine object, it is known whether it was detected or not, and by which sensor (since for each marine object, after the association process described in the various embodiments above, it is known which data has been acquired by each of the sensors). Performance for each sensor and for each marine object can be stored in the database. It is therefore possible to query (operation **503**) the database to output performance of the imaging device (or another sensor) for specific configurations (e.g.: what is the performance of the imaging device at a distance more than 4 miles? What is the performance of the radar for cargo in rough sea, etc.). Based on this query, it is possible to attempt to improve performance of sensor(s) in specific configurations in which they underperformed. Similarly, it is possible to query the database to obtain images of marine objects with desired parameters (e.g. specific size, specific type, etc.).

Another usage of this method is depicted in **Fig. 5B** (see operation **504**), for generating automatically labelled images of marine objects.

Assume that a sensor (e.g. AIS) of the marine vessel provides information on the type of the marine objects (e.g. "cargo", "fishing vessel", etc.). Therefore, for each of a plurality of marine objects detected by the imaging device, it is possible to automatically determine the type of the marine objects, as provided by the AIS (since it is known that the respective acquisitions by the imaging device and the AIS correspond to the same physical object).

As a consequence, it is possible to generate automatically a set of labelled images, which comprise the image of a marine object and a label indicative of the type of the marine object (or other/additional parameters, such as state of the sea, distance of the marine object, etc.). An automatic labelling (sensor labelling) of marine objects is therefore achieved. The labelled images can be used e.g. for supervised training of a deep neural network configured to detect marine objects in images. A training with a higher granularity is therefore achieved.

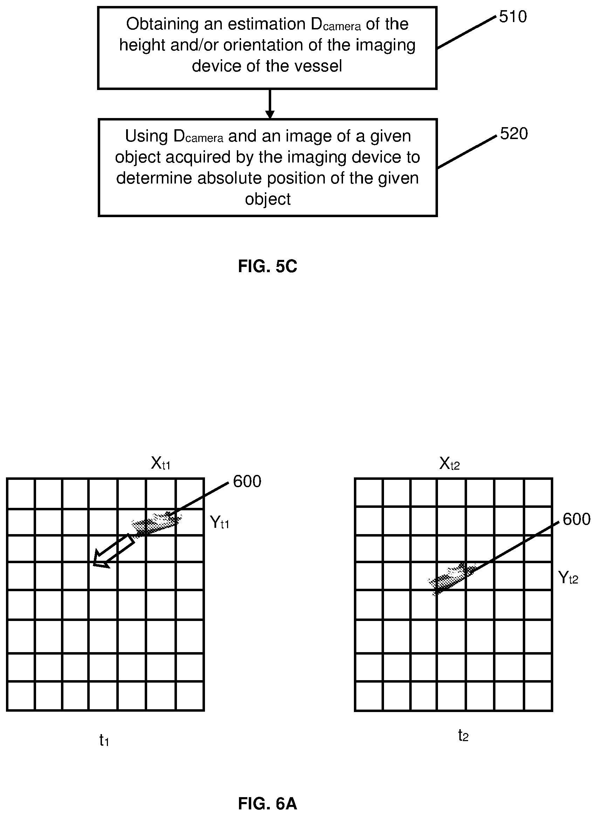

Attention is now drawn to **Fig. 5C****.**

According to some embodiments, at least some of the marine objects encountered by the marine vessel **125** during its voyage do not have a localization system which provides their position (such as AIS, GPS, etc.). For example, an iceberg does not have a localization system.

Assume that a given marine object does not have a localization system. The given marine object may be a new object (which was not used in the method of determining height and/or orientation of the imaging device **120**)**.**

Once height and/or orientation of the imaging device **120** has been determined (operation **510** - using e.g., the various methods described above), it is possible to use (operation **520**) an image of the given marine object acquired by the imaging device **120,** and the estimated height and/or orientation of the imaging device **120** to determine absolute position (e.g. in world coordinates) of the given marine object.

A method of converting the position of the given marine object from the referential of the image to a global/absolute position (independent from the referential of the image) has been provided e.g., with reference to **Fig. 2G** and can be used herein.

Similarly, it is possible to determine a distance between the marine object and the marine vessel (using e.g. the method described with reference to **Fig. 2G****,** see e.g. *"euclidean_dist").*

This is highly beneficial, since some marine objects are detected only by the imaging device **120** (for example, a fishing vessel which does not embed an AIS, and which is close to the marine vessel **125,** is detected only by the imaging device **120,** and not by other sensors of the marine vessel such as AIS and radar), and this method enables to determine their global/absolute position in a desired referential (or other parameters), although the parameters (D_{camera}) of the imaging device **120** evolve over time, as already explained.

It is therefore possible to determine position of a marine object (and/or distance between the marine vessel and the marine object) using only an image of the marine object acquired by the imaging device (position is determined in a referential independent of the image).

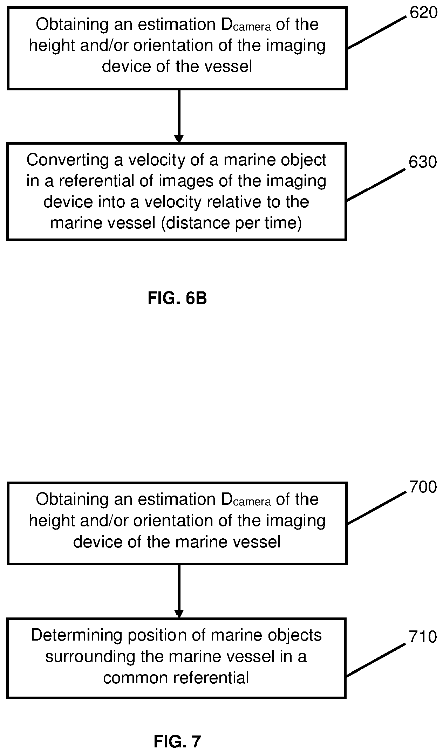

Attention is now drawn to **Figs. 6A** and **6B****.**

When a marine object is detected over a plurality of images acquired by the imaging device **120,** it is possible to track the marine objects in the plurality of images, as explained above. This is shown in **Fig. 6A****,** in which at time t₁, marine vessel **600** is detected at position Xₜ₁, Yₜ₁ in the referential of the image.

At time t₂, marine vessel **600** is detected at position Xₜ₂, Yₜ₂ in the referential of the image.

The velocity of the marine vessel **600** relative to the marine vessel **125** can be calculated in the referential of the image (e.g. in terms of pixels per unit of time). In the example of **Fig. 6A****,** the marine vessel **600** has moved by two pixels in a period of time "t₂-t₁".

Since data informative of the height and/or orientation of the imaging device **120** has been estimated (operation **620** - using the various methods described above), it is possible to convert (operation **630**) the velocity of the marine vessel **600** in the referential of the image into a velocity of the object relative to the marine vessel (e.g. expressed in distance per unit of time). This can use a method similar to **Fig. 2F** to determine position in the global referential (e.g. Earth referential, which is independent from the referential of the image), and therefore velocity (which is a derivative of the position over time). In other words, it is possible to use the imaging device **120** to determine a velocity at which a marine object is moving (e.g. approaching or moving away) relative to the marine vessel **125.**

In particular, it is possible to use only the imaging device **120** to determine a velocity of marine objects relative to the marine vessel **125** (expressed in distance per time relative to the marine vessel **125**).

Since position of the marine object can be expressed in a global/absolute referential (e.g. Earth referential), it is possible to determine also direction of motion of the marine object over time in an absolute referential. In other words, a velocity vector can be determined in the absolute referential, using (only) data acquired by the imaging device **120.**

Attention is now drawn to **Fig. 7****.**

In order to control the trajectory of the marine vessel **125,** it is beneficial to determine position of various marine objects surrounding the marine vessel **125,** which can be detected by various sensors **130** of the marine vessel **125.** In particular, position of the various marine objects should be expressed in a common referential (e.g. an absolute referential such as an Earth referential).

For example, it is beneficial for an operator of the marine vessel to obtain a map enabling a visualization of the position of the different marine objects surrounding the marine vessel 125. This can be helpful to facilitate control of the marine vessel during its voyage.

Similarly, the position of various marine objects surrounding the marine vessel **125** in a common referential can be used by an auto-pilot system of the marine vessel, which controls trajectory of the marine vessel over time.

Once height and/or orientation of the imaging device **120** has been estimated (operation **700** - using e.g., the methods of **Figs. 2A, 2B****,** **4A** and **4B**), it is possible to convert position of each marine object from a relative position (determined in a referential of the image acquired by the imaging device **120**) into an absolute position (independent from the referential of the image, such as world coordinates). Embodiments for performing this conversion have been described above (see **Fig. 2G**).

Regarding other sensors **115** of the marine vessel **125,** some of them provide an absolute position (such as AIS, GPS) of the marine objects.

Some of sensors **115** (which are not imaging devices) provide a relative position (such as a radar) which can be converted into an absolute position, as explained above.

Therefore, position of the marine objects acquired by the various sensors **130** of the marine vessel **125** can be expressed (operation **710**) in a common referential (e.g., absolute referential).

A map of the position of the marine objects, expressed in a common referential (absolute referential), can be generated. In some embodiments, the map can include a graphical map in which position of each marine object can be depicted.

In some embodiments, type of the marine objects can be determined (e.g. using the images of the imaging device **120**) or obtained (e.g. from an AIS).

The graphical map can therefore depict, for each marine object, a type of the marine object. Navigation is therefore facilitated.

Since a given marine object may be acquired by a plurality of different sensors of the marine vessel **125,** in some embodiments it is possible to merge (e.g. in the map) marine objects acquired by different sensors and which have similar position (and, in some embodiments, similar type) into a single marine object with a single position. Two marine objects can be considered to share a similar position e.g. when a distance between the two marine objects is below a threshold.

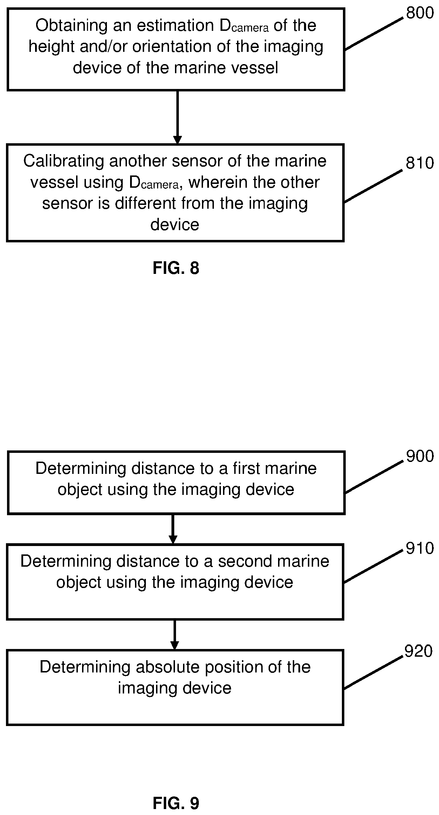

Attention is now drawn to **Fig. 8****.**

The marine vessel **125** can include one or more sensors (different from the imaging device **120**), which need to be calibrated. For example, a sensor such as IMU (Inertial Measurement Unit) has drift over time, and therefore needs to be recalibrated over time.

The method of **Fig. 8** includes obtaining (operation **800**) data D_{camera} informative of height and/or orientation of the imaging device **120** (estimated using e.g. the various methods described above). In some embodiments, operation **800** can include obtaining D_{field_of_view} informative of the field of view of the imaging device, as estimated using the methods described above.

The method further includes using D_{camera} to calibrate (operation **810**) another sensor of the marine vessel **125,** which is different from the imaging device **120.** In some embodiments, the other sensor is not an imaging device, but this is not limitative. Calibration of the other sensor can include providing the "true" orientation (extracted from D_{camera}) to the other sensor to calibrate it. In some embodiments, a plurality of other sensors can be recalibrated. In some embodiments, the calibration can use D_{field_of_view}.

In some embodiments, since D_{camera} is determined over a plurality of periods of time, it is possible to (re)calibrate the other sensor over time.

For example, IMU of the marine vessel **125** can be calibrated. IMU generally measures orientation (roll, pitch, yaw) and altitude of the marine vessel **125.** Orientation and/or height of the imaging device **120** as estimated using the various methods described above can be used to calibrate orientation and/or height measured by IMU of the marine vessel **125,** at a given period of time or at a plurality of periods of time.

For example, assume that the IMU and the imaging device **120** are physically aligned (e.g. they have the same orientation). During voyage of the marine vessel **125,** orientation and/or height provided by IMU includes a drift, which needs to be corrected. Since orientation and/or height of the imaging device **120** can be determined (as explained in the various methods above), this can be used to recalibrate the IMU and cancel the error caused by the drift.

Although an example referring to recalibration of IMU has been provided, this applies similarly to other sensors (e.g. an experimental radar, etc.) present on the marine vessel **125,** and which need to be calibrated/recalibrated. The orientation and/or height of the imaging device **120** can be used to perform the calibration/recalibration of the other sensor.

Attention is now drawn to **Fig. 9****.**

Assume that orientation and/or height of the imaging device **120** has been estimated as explained in the various embodiments above. In some embodiments, the field of view of the imaging device has also been estimated.

The method of **Fig. 9** includes using the orientation and/or height of the imaging device **120,** at least one image of at least two marine objects to determine absolute position of the imaging device **120** (in some embodiments, estimation of the field of view of the imaging device can also be used).

This can include acquiring an image of a first marine object and determining (operation **900**) distance to the first marine object (this can be determined using the equations provided with reference to **Fig. 2F**)**.**

This can include acquiring an image of a second marine object (different from the first marine object) and determining (operation **910**) distance to the second marine object (this can be determined using the equations provided with reference to **Fig. 2F**).

Since position of the first and second marine objects is known (e.g., because they embed a localization system such as AIS), and the distance of the marine vessel **125** to each of these marine objects has been determined, the absolute position (latitude/longitude) of the marine vessel **125** can be determined (operation **920** - as an intersection of two circles). This is useful since this enables to be independent from localization systems such as GPS. This can be used also to up-sample localization data provided by the localization systems such as GPS.

Embodiments of the presently disclosed subject matter are not described with reference to any particular programming language. It will be appreciated that a variety of programming languages may be used to implement the teachings of the presently disclosed subject matter as described herein.

The invention contemplates a computer program being readable by a computer for executing one or more methods of the invention. The invention further contemplates a machine-readable memory tangibly embodying a program of instructions executable by the machine for executing one or more methods of the invention.

It is to be noted that the various features described in the various embodiments may be combined according to all possible technical combinations.

It is to be understood that the invention is not limited in its application to the details set forth in the description contained herein or illustrated in the drawings. The invention is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based may readily be utilized as a basis for designing other structures, methods, and systems for carrying out the several purposes of the presently disclosed subject matter.

Those skilled in the art will readily appreciate that various modifications and changes can be applied to the embodiments of the invention as hereinbefore described without departing from its scope, defined in and by the appended claims.

## Claims

1. A system (100) comprising a processor and memory circuitry, PMC, (110) configured to estimate data informative of at least one of a height or an orientation of at least one imaging device (120) of a marine vessel (125), wherein at least one of the height and the orientation of the at least one imaging device is variable over time, the estimating comprising:
obtain first position data informative of a position of first marine objects, wherein the first position data is obtained based on images acquired by at least one imaging device of a marine vessel,
obtain second position data informative of a position of second marine objects,
wherein the second position data is obtained based on data acquired by at least one sensor (115) of the marine vessel, wherein the at least one sensor is different from the imaging device, wherein at least some of the first marine objects are the same as at least some of the second marine objects, and
use the first position data and the second position data to estimate data informative of at least one of a height or an orientation of the imaging device of the marine vessel,
wherein at least one of (i) or (ii) is met:
(i) using the first position data and the second position data comprises determining data D_{camera} informative of at least one of a height or an orientation of the imaging device which optimize a matching between:
position of at least some of the first marine objects determined using D_{camera} and the first position data, and
second position data of at least some of the second marine objects according to a criterion;
(ii) the system is configured to use the first position data and the second position data to determine data D_{field_of_view} informative of a field of view of the imaging device which optimize a matching between:
position of at least some of the first marine objects determined using D_{field_of_view} and the first position data, and
second position data of at least some of the second marine objects, according to a criterion.

2. The system of claim 1, wherein the orientation comprises at least one of roll, pitch and yaw of the at least one imaging device, wherein the system is configured to estimate at least one of roll, pitch and yaw of the at least one imaging device over time.

3. The system of claim 1 or of claim 2, configured to perform at least one of (i) or (ii):
(i) estimate data informative of at least one of a height or an orientation of the at least one imaging device at a first period of time, to obtain first estimated data, and estimate data informative of at least one of a height or an orientation of the at least one imaging device at a second period of time, different from the first period of time, using the first estimated data;
(ii) estimate data informative of at least one of a height or an orientation of the at least one imaging device at a first period of time, said estimate comprising determining an association between at least some of the first marine objects and at least some of the second marine objects, and estimate data informative of at least one of a height or an orientation of the at least one imaging device at a second period of time, different from the first period of time, using said association.

4. The system of any one of claims 1 to 3, configured to:
(1) obtain first position data informative of a position of first marine objects FIRSTMOBJ_{1,i} to FIRSTMOBJ_{N,i} at a first period of time T_{1,i}, wherein the first position data is obtained based on images acquired by the least one imaging device of the marine vessel,
(2) obtain second position data informative of a position of second marine objects SNDMOBJ_{1,i} to SNDMOBJ_{M,i} at a second period of time T_{2,i}, wherein the first period of time T_{1,i} and the second period of time T_{2,i} meet a synchronization criterion,
wherein the second position data is obtained based on data acquired by the at least one sensor of the marine vessel, wherein the at least one sensor is different from the imaging device, wherein at least some of the first marine objects FIRSTMOBJ_{1,i} to FIRSTMOBJ_{N,i} are the same as at least some of the second marine objects SNDMOBJ_{1,i} to SNDMOBJ_{M,i},
(3) use the first position data and the second position data to estimate data informative of at least one of a height or an orientation of the at least one imaging device of the marine vessel, and
(4) repeat (1), (2) and (3) for i incremented by one, wherein a first period of time T_{1,i+1} differs from T_{1,i} and a second period of time T_{1,i+1} differs from T_{2,i}, for repetitively estimating data informative of at least one of a height or an orientation of the imaging device of the marine vessel over time.

5. The system of any one of claims 1 to 4, wherein at least one of (i), (ii) and (iii) is met:
(i) the at least one sensor is not an imaging device;
(ii) the at least one sensor includes at least one of a radar and an automatic identification system ,AIS;
(iii) the at least one sensor includes a first sensor and a second sensor, wherein the second sensor is of a different type than the first sensor, and wherein the first sensor and the second sensor are not imaging devices.

6. The system of any one of claims 1 to 5, wherein (i) or (ii) is met:
(i) the system is configured to obtain a set of first position data informative of a position of first marine objects, wherein the set of first position data is obtained based on images acquired by the at least one imaging device of the marine vessel, wherein the set of first position data comprises, for each object of a plurality of the first marine objects, a position of the object at a plurality of first periods of time,
obtain a set of second position data informative of a position of second marine objects,
wherein the set of second position data comprises, for each object of a plurality of the second marine objects, a position of the object at a plurality of periods of time,
wherein the first periods of time and the second periods of time meet a synchronization criterion,
wherein the set of second position data is obtained based on data acquired by at least one sensor of the marine vessel,
wherein the at least one sensor is different from the imaging device, wherein at least some of the first marine objects are the same as at least some of the second marine objects, and
use the first set of position data and the second set of position data to estimate data informative of at least one of a height or an orientation of the imaging device over time;
(ii) the system is configured to obtain a set of first position data informative of a position of first marine objects, wherein the set of first position data is obtained based on images acquired by the at least one imaging device of the marine vessel, wherein the set of first position data comprises, for each object of a plurality of the first marine objects, a position of the object at a plurality of first periods of time,
obtain a set of second position data informative of a position of second marine objects,
wherein the set of second position data comprises, for each object of a plurality of the second marine objects, a position of the object at a plurality of periods of time,
wherein the first periods of time and the second periods of time meet a synchronization criterion,
wherein the set of second position data is obtained based on data acquired by at least one sensor of the marine vessel,
wherein the at least one sensor is different from the imaging device, wherein at least some of the first marine objects are the same as at least some of the second marine objects,
use the first set of position data and the second set of position data to estimate data informative of at least one of a height or an orientation of the imaging device over time,
track position of at least some of the first marine objects at the first periods of time and position of at least some of the second marine objects at the second periods of time, and
use said tracking to estimate data D_{camera} informative of at least one of a height or an orientation of the imaging device which optimize a matching between a position of at least some of the first marine objects determined using D_{camera} and the set of first position data, and a position of the second marine objects obtained based on the second set of position data.

7. The system of any one of claims 1 to 6, wherein (i) or (ii) is met:
(i) the system is configured to obtain first position data informative of a position of first marine objects, wherein the first position data is obtained based on images acquired by at least one imaging device of a marine vessel,
obtain second position data informative of a position of second marine objects,
wherein the second position data is obtained based on data acquired by at least one first sensor of the marine vessel, wherein the at least one first sensor is different from the imaging device,
obtain third position data informative of a position of third marine objects,
wherein the third position data is obtained based on data acquired by at least one second sensor of the marine vessel, wherein the at least one second sensor is different from the imaging device and from the first sensor,
wherein at least some of the first, second and third marine objects are the same marine objects,
use the first position data, the second position data and the third position data to estimate data informative of at least one of a height or an orientation of the imaging device of the marine vessel;
(ii) the system is configured to obtain first position data informative of a position of first marine objects, wherein the first position data is obtained based on images acquired by at least one imaging device of a marine vessel,
obtain second position data informative of a position of second marine objects, wherein the second position data is obtained based on data acquired by at least one first sensor of the marine vessel,
wherein the at least one first sensor is different from the imaging device, obtain third position data informative of a position of third marine objects,
wherein the third position data is obtained based on data acquired by at least one second sensor of the marine vessel,
wherein the at least one second sensor is different from the imaging device and from the first sensor,
wherein at least some of the first, second and third marine objects are the same marine objects,
use the first position data, the second position data and the third position data to estimate data informative of at least one of a height or an orientation of the imaging device of the marine vessel, and
associate at least some of the second marine objects with at least some of the third marine objects to generate an aggregated set of marine objects, each associated with a position provided by the first sensor or the second sensor.

8. The system of any one of claims 1 to 7, wherein at least one (i), (ii) or (iii) is met:
(i) the system is configured to determine data D_{camera} informative of at least one of a height or an orientation of the imaging device which optimize a matching between position of at least some of the first marine objects projected in a common referential using D_{camera} and the first position data, and position in the common referential of at least some of the second marine objects according to a criterion;
(ii) the system is configured to iteratively estimate data informative of at least one of a height or an orientation of the imaging device for a given period of time, until a convergence criterion is met;
(iii) the system is configured to determine that a marine object of the first marine objects and a marine object of the second marine objects correspond to a same given marine object acquired respectively by the imaging device and the at least one sensor, and determine a parameter of the given marine object using data provided by the at least one sensor, or determine a parameter of the given marine object using data provided by the imaging device.

9. The system of any one of claims 1 to 8, wherein at least one of (i) or (ii) is met:
(i) the system is configured to determine a position of at least one given object of the first marine objects acquired by the imaging device based on second position data of a given object of the second marine objects, wherein a matching between the given object of the first marine objects and the given object of the second marine objects has been determined based on at least part of the first position data and the second position data;
(ii) estimating data informative of at least one of a height or an orientation of the imaging device comprises using data informative of a type of the first marine objects and data informative of a type of the second marine objects to determine a matching between at least some of the first marine objects and at least some of the second marine objects.

10. The system of any one of claims 1 to 9, wherein at least one (i) or (ii) is met:
(i) the system is configured to use data informative of at least one of a height or an orientation of the imaging device as estimated and an image of a marine object acquired by the imaging device to determine data informative of a position of the marine object in a referential independent of the image, or data informative of a distance between the marine object and the marine vessel;
(ii) the marine object is acquired by the imaging device of the marine vessel, but is not detected by any of the other sensors present in the marine vessel, wherein said other sensors are not imaging devices.

11. The system of any one of claims 1 to 10, wherein at least one of (i), (ii) or (iii) is met:
(i) the system is configured to use data informative of at least one of a height or an orientation of the imaging device as estimated to output a position of a marine object as acquired by the imaging device and a position of another marine object acquired by the other sensor in a common referential;
(ii) the system is configured to use data informative of at least one of a height or an orientation of the imaging device as estimated, and images of the marine object acquired by the imaging vessel, to determine a velocity of the marine object relative to the marine vessel;
(iii) the system is configured to use data informative of at least one of a height or an orientation of the imaging device as estimated to calibrate another sensor of the marine vessel, different from the imaging device.

12. The system of any one of claims 1 to 11, wherein (i), (ii) or (iii) is met:
(i) the PMC is configured to, for each of a plurality of first given marine objects of the first marine objects and second given marine objects of the second marine objects:
determine that the first given marine object and the second given marine object correspond to a same given marine object of a plurality of given marine objects acquired by the imaging device and the at least one sensor,
generate a dataset of a plurality of labelled images, wherein each labelled image comprises an image of a given marine object of said plurality of given marine objects, and a label;
(ii) the PMC is configured to, for each of a plurality of first given marine objects of the first marine objects and second given marine objects of the second marine objects:
determine that the first given marine object and the second given marine object correspond to a same given marine object of a plurality of given marine objects acquired by the imaging device and the at least one sensor,
generate a dataset of a plurality of labelled images, wherein each labelled image comprises an image of a given marine object of said plurality of given marine objects, and a label determined by the PMC based on data provided by at least one of the imaging device and the at least one sensor;
(iii) the PMC is configured to, for each of a plurality of first given marine objects of the first marine objects and second given marine objects of the second marine objects:
determine that the first given marine object and the second given marine object correspond to a same given marine object of a plurality of given marine objects acquired by the imaging device and the at least one sensor,
generate a database comprising for each of said plurality of given marine objects, data informative of said plurality of given marine objects, and data informative of performance of detection of said plurality of given marine objects by at least one of the imaging device and the at least one sensor.

13. A non-transitory computer readable medium comprising instructions that, when executed by a processor and memory circuitry ,PMC, (110) cause the PMC to estimate data informative of at least one of a height or an orientation of at least one imaging device (120) of a marine vessel (125), wherein at least one of the height and the orientation of the at least one imaging device is variable over time, the estimating comprising:
obtaining first position data informative of a position of first marine objects, wherein the first position data is obtained based on images acquired by at least one imaging device of a marine vessel,
obtaining second position data informative of a position of second marine objects,
wherein the second position data is obtained based on data acquired by at least one sensor (115) of the marine vessel, wherein the at least one sensor is different from the imaging device, wherein at least some of the first marine objects are the same as at least some of the second marine objects, and
using the first position data and the second position data to estimate data informative of at least one of a height or an orientation of the at least one imaging device of the marine vessel.

14. A marine vessel (125) comprising:
at least one imaging device (120) as recited in any one of claims 1 to 12,
at least one sensor (115) different from the image device, as recited in any one of claims 1 to 12, and
the system (100) of any one of claims 1 to 12.

## Patentansprüche

1. System (100), umfassend einen Prozessor- und Speicherschaltkreis, PMC, (110), welcher dazu eingerichtet ist, Daten zu schätzen, welche wenigstens eines aus einer Höhe oder einer Orientierung wenigstens einer Bildgebungsvorrichtung (120) eines Wasserfahrzeugs (125) angeben, wobei wenigstens eines aus der Höhe und der Orientierung der wenigstens einen Bildgebungsvorrichtung zeitlich veränderlich ist, wobei das Schätzen umfasst:
erste Positionsdaten zu erhalten, welche eine Position erster Seeobjekte angeben, wobei die ersten Positionsdaten auf Grundlage von Bildern erhalten werden, welche von wenigstens einer Bildgebungsvorrichtung eines Wasserfahrzeugs erfasst werden,
zweite Positionsdaten zu erhalten, welche eine Position zweiter Seeobjekte angeben,
wobei die zweiten Positionsdaten auf Grundlage von Daten erhalten werden, welche von wenigstens einem Sensor (115) des Wasserfahrzeugs erfasst werden, wobei der wenigstens eine Sensor von der Bildgebungsvorrichtung verschieden ist, wobei wenigstens einige der ersten Seeobjekte dieselben sind wie wenigstens einige der zweiten Seeobjekte, und
die ersten Positionsdaten und die zweiten Positionsdaten zu verwenden, um Daten zu schätzen, welche wenigstens eines aus einer Höhe oder einer Orientierung der Bildgebungsvorrichtung des Wasserfahrzeugs angeben,
wobei wenigstens eines aus (i) oder (ii) erfüllt ist:
(i) ein Verwenden der ersten Positionsdaten und der zweiten Positionsdaten umfasst ein Bestimmen von Daten *D_{Kamera}*, welche wenigstens eines aus einer Höhe oder einer Orientierung der Bildgebungsvorrichtung angeben, welche eine Übereinstimmung optimieren zwischen:
einer Position wenigstens einiger der ersten Seeobjekte, welche unter Verwendung von *D_{Kamera}* und den ersten Positionsdaten bestimmt wird, und
zweiten Positionsdaten wenigstens einiger der zweiten Seeobjekte gemäß einem Kriterium;
(ii) das System ist dazu eingerichtet, die ersten Positionsdaten und die zweiten Positionsdaten zu verwenden, um Daten *D_{Sichtfeld}* zu bestimmen, welche ein Sichtfeld der Bildgebungsvorrichtung angeben, welche eine Übereinstimmung optimieren zwischen:
einer Position wenigstens einiger der ersten Seeobjekte, welche unter Verwendung von *D_{Sichtfeld}* und den ersten Positionsdaten bestimmt wird, und
zweiten Positionsdaten wenigstens einiger der zweiten Seeobjekte gemäß einem Kriterium.

2. System nach Anspruch 1, wobei die Orientierung wenigstens eines aus Rollen, Nicken und Gieren der wenigstens einen Bildgebungsvorrichtung umfasst, wobei das System dazu eingerichtet ist, wenigstens eines aus Rollen, Nicken und Gieren der wenigstens einen Bildgebungsvorrichtung über eine Zeit zu schätzen.

3. System nach Anspruch 1 oder nach Anspruch 2, welches dazu eingerichtet ist, wenigstens eines aus (i) oder (ii) auszuführen:
(i) Schätzen von Daten, welche wenigstens eines aus einer Höhe oder einer Orientierung der wenigstens einen Bildgebungsvorrichtung zu einem ersten Zeitraum angeben, um erste geschätzte Daten zu erhalten, und Schätzen von Daten, welche wenigstens eines aus einer Höhe oder einer Orientierung der wenigstens einen Bildgebungsvorrichtung zu einem zweiten Zeitraum angeben, welcher von dem ersten Zeitraum verschieden ist, unter Verwendung der ersten geschätzten Daten;
(ii) Schätzen von Daten, welche wenigstens eines aus einer Höhe oder einer Orientierung der wenigstens einen Bildgebungsvorrichtung zu einem ersten Zeitraum angeben, wobei das Schätzen ein Bestimmen einer Zuordnung zwischen wenigstens einigen der ersten Seeobjekte und wenigstens einigen der zweiten Seeobjekte umfasst, und Schätzen von Daten, welche wenigstens eines aus einer Höhe oder einer Orientierung der wenigstens einen Bildgebungsvorrichtung zu einem zweiten Zeitraum angeben, welcher von dem ersten Zeitraum verschieden ist, unter Verwendung der Zuordnung.

4. System nach einem der Ansprüche 1 bis 3, welches dazu eingerichtet ist:
(1) erste Positionsdaten zu erhalten, welche eine Position erster Seeobjekte *FIRSTMOBJ_{1,i}* bis FIRSTMOBJ_{N,i} zu einem ersten Zeitraum T_{1,i} angeben, wobei die ersten Positionsdaten auf Grundlage von Bildern erhalten werden, welche von der wenigstens einen Bildgebungsvorrichtung des Wasserfahrzeugs erfasst werden,
(2) zweite Positionsdaten zu erhalten, welche eine Position zweiter Seeobjekte *SNDMOBJ_{1,i}* bis *SNDMOBJ_{M,i}* zu einem zweiten Zeitraum T_{2,i} angeben, wobei der erste Zeitraum T_{1,i} und der zweite Zeitraum T_{2,i} ein Synchronisierungskriterium erfüllen,
wobei die zweiten Positionsdaten auf Grundlage von Daten erhalten werden, welche von dem wenigstens einen Sensor des Wasserfahrzeugs erfasst werden, wobei der wenigstens eine Sensor von der Bildgebungsvorrichtung verschieden ist, wobei wenigstens einige der ersten Seeobjekte *FIRSTMOBJ_{1,i}* bis FIRSTMOBJ_{N,i} dieselben sind wie wenigstens einige der zweiten Seeobjekte *SNDMOBJ_{1,i}* bis *SNDMOBJ_{M,i},*
(3) die ersten Positionsdaten und die zweiten Positionsdaten zu verwenden, um Daten zu schätzen, welche wenigstens eines aus einer Höhe oder einer Orientierung der wenigstens einen Bildgebungsvorrichtung des Wasserfahrzeugs angeben, und
(4) (1), (2) und (3) für um eins inkrementiertes i zu wiederholen, wobei ein erster Zeitraum T_{1,i+1} von T_{1,i} verschieden ist und ein zweiter Zeitraum T_{1,i+1} von T_{2,i} verschieden ist, um Daten, welche wenigstens eines aus einer Höhe oder einer Orientierung der Bildgebungsvorrichtung des Wasserfahrzeugs angeben, über die Zeit wiederholt zu schätzen.

5. System nach einem der Ansprüche 1 bis 4, wobei wenigstens eines aus (i), (ii) und (iii) erfüllt ist:
(i) der wenigstens eine Sensor ist keine Bildgebungsvorrichtung;
(ii) der wenigstens eine Sensor umfasst wenigstens eines aus einem Radar und einem automatischen Identifikationssystem, AIS;
(iii) der wenigstens eine Sensor umfasst einen ersten Sensor und einen zweiten Sensor, wobei der zweite Sensor von einem anderen Typ als der erste Sensor ist, und wobei der erste Sensor und der zweite Sensor keine Bildgebungsvorrichtungen sind.

6. System nach einem der Ansprüche 1 bis 5, wobei (i) oder (ii) erfüllt ist:
(i) das System ist dazu eingerichtet, einen Satz erster Positionsdaten zu erhalten, welche eine Position erster Seeobjekte angeben, wobei der Satz erster Positionsdaten auf Grundlage von Bildern erhalten wird, welche von der wenigstens einen Bildgebungsvorrichtung des Wasserfahrzeugs erfasst werden, wobei der Satz erster Positionsdaten für jedes Objekt einer Mehrzahl der ersten Seeobjekte eine Position des Objekts zu einer Mehrzahl erster Zeiträume umfasst,
einen Satz zweiter Positionsdaten zu erhalten, welche eine Position zweiter Seeobjekte angeben,
wobei der Satz zweiter Positionsdaten für jedes Objekt einer Mehrzahl der zweiten Seeobjekte eine Position des Objekts zu einer Mehrzahl von Zeiträumen umfasst,
wobei die ersten Zeiträume und die zweiten Zeiträume ein Synchronisierungskriterium erfüllen,
wobei der Satz zweiter Positionsdaten auf Grundlage von Daten erhalten wird, welche von wenigstens einem Sensor des Wasserfahrzeugs erfasst werden,
wobei der wenigstens eine Sensor von der Bildgebungsvorrichtung verschieden ist, wobei wenigstens einige der ersten Seeobjekte dieselben sind wie wenigstens einige der zweiten Seeobjekte, und
den ersten Satz von Positionsdaten und den zweiten Satz von Positionsdaten zu verwenden, um Daten zu schätzen, welche wenigstens eines aus einer Höhe oder einer Orientierung der Bildgebungsvorrichtung über die Zeit angeben;
(ii) das System ist dazu eingerichtet, einen Satz erster Positionsdaten zu erhalten, welche eine Position erster Seeobjekte angeben, wobei der Satz erster Positionsdaten auf Grundlage von Bildern erhalten wird, welche von der wenigstens einen Bildgebungsvorrichtung des Wasserfahrzeugs erfasst werden, wobei der Satz erster Positionsdaten für jedes Objekt einer Mehrzahl der ersten Seeobjekte eine Position des Objekts zu einer Mehrzahl erster Zeiträume umfasst,
einen Satz zweiter Positionsdaten zu erhalten, welche eine Position zweiter Seeobjekte angeben,
wobei der Satz zweiter Positionsdaten für jedes Objekt einer Mehrzahl der zweiten Seeobjekte eine Position des Objekts zu einer Mehrzahl von Zeiträumen umfasst,
wobei die ersten Zeiträume und die zweiten Zeiträume ein Synchronisierungskriterium erfüllen,
wobei der Satz zweiter Positionsdaten auf Grundlage von Daten erhalten wird, welche von wenigstens einem Sensor des Wasserfahrzeugs erfasst werden,
wobei der wenigstens eine Sensor von der Bildgebungsvorrichtung verschieden ist, wobei wenigstens einige der ersten Seeobjekte dieselben sind wie wenigstens einige der zweiten Seeobjekte,
den ersten Satz von Positionsdaten und den zweiten Satz von Positionsdaten zu verwenden, um Daten zu schätzen, welche wenigstens eines aus einer Höhe oder einer Orientierung der Bildgebungsvorrichtung über die Zeit angeben,
eine Position wenigstens einiger der ersten Seeobjekte zu den ersten Zeiträumen und eine Position wenigstens einiger der zweiten Seeobjekte zu den zweiten Zeiträumen zu verfolgen, und
das Verfolgen zu verwenden, um Daten *D_{Kamera}* zu schätzen, welche wenigstens eines aus einer Höhe oder einer Orientierung der Bildgebungsvorrichtung angeben, welche eine Übereinstimmung optimieren zwischen einer Position wenigstens einiger der ersten Seeobjekte, welche unter Verwendung von *D_{Kamera}* und dem Satz erster Positionsdaten bestimmt wird, und einer Position der zweiten Seeobjekte, welche auf Grundlage des zweiten Satzes von Positionsdaten erhalten wird.

7. System nach einem der Ansprüche 1 bis 6, wobei (i) oder (ii) erfüllt ist:
(i) das System ist dazu eingerichtet, erste Positionsdaten zu erhalten, welche eine Position erster Seeobjekte angeben, wobei die ersten Positionsdaten auf Grundlage von Bildern erhalten werden, welche von wenigstens einer Bildgebungsvorrichtung eines Wasserfahrzeugs erfasst werden,
zweite Positionsdaten zu erhalten, welche eine Position zweiter Seeobjekte angeben,
wobei die zweiten Positionsdaten auf Grundlage von Daten erhalten werden, welche von wenigstens einem ersten Sensor des Wasserfahrzeugs erfasst werden, wobei der wenigstens eine erste Sensor von der Bildgebungsvorrichtung verschieden ist,
dritte Positionsdaten zu erhalten, welche eine Position dritter Seeobjekte angeben,
wobei die dritten Positionsdaten auf Grundlage von Daten erhalten werden, welche von wenigstens einem zweiten Sensor des Wasserfahrzeugs erfasst werden, wobei der wenigstens eine zweite Sensor von der Bildgebungsvorrichtung und von dem ersten Sensor verschieden ist,
wobei wenigstens einige der ersten, zweiten und dritten Seeobjekte dieselben Seeobjekte sind,
die ersten Positionsdaten, die zweiten Positionsdaten und die dritten Positionsdaten zu verwenden, um Daten zu schätzen, welche wenigstens eines aus einer Höhe oder einer Orientierung der Bildgebungsvorrichtung des Wasserfahrzeugs angeben;
(ii) das System ist dazu eingerichtet, erste Positionsdaten zu erhalten, welche eine Position erster Seeobjekte angeben, wobei die ersten Positionsdaten auf Grundlage von Bildern erhalten werden, welche von wenigstens einer Bildgebungsvorrichtung eines Wasserfahrzeugs erfasst werden,
zweite Positionsdaten zu erhalten, welche eine Position zweiter Seeobjekte angeben, wobei die zweiten Positionsdaten auf Grundlage von Daten erhalten werden, welche von wenigstens einem ersten Sensor des Wasserfahrzeugs erfasst werden,
wobei der wenigstens eine erste Sensor von der Bildgebungsvorrichtung verschieden ist,
dritte Positionsdaten zu erhalten, welche eine Position dritter Seeobjekte angeben,
wobei die dritten Positionsdaten auf Grundlage von Daten erhalten werden, welche von wenigstens einem zweiten Sensor des Wasserfahrzeugs erfasst werden,
wobei der wenigstens eine zweite Sensor von der Bildgebungsvorrichtung und von dem ersten Sensor verschieden ist, wobei wenigstens einige der ersten, zweiten und dritten Seeobjekte dieselben Seeobjekte sind,
die ersten Positionsdaten, die zweiten Positionsdaten und die dritten Positionsdaten zu verwenden, um Daten zu schätzen, welche wenigstens eines aus einer Höhe oder einer Orientierung der Bildgebungsvorrichtung des Wasserfahrzeugs angeben, und wenigstens einige der zweiten Seeobjekte wenigstens einigen der dritten Seeobjekte zuzuordnen, um eine aggregierte Menge von Seeobjekten zu erzeugen, welche jeweils einer Position zugeordnet sind, welche von dem ersten Sensor oder dem zweiten Sensor bereitgestellt wird.

8. System nach einem der Ansprüche 1 bis 7, wobei wenigstens eines aus (i), (ii) oder (iii) erfüllt ist:
(i) das System ist dazu eingerichtet, Daten *D_{Kamera}* zu bestimmen, welche wenigstens eines aus einer Höhe oder einer Orientierung der Bildgebungsvorrichtung angeben, welche eine Übereinstimmung optimieren zwischen einer Position wenigstens einiger der ersten Seeobjekte, welche unter Verwendung von *D_{Kamera}* in ein gemeinsames Referenzsystem projiziert werden, und den ersten Positionsdaten, und einer Position in dem gemeinsamen Referenzsystem wenigstens einiger der zweiten Seeobjekte gemäß einem Kriterium;
(ii) das System ist dazu eingerichtet, Daten, welche wenigstens eines aus einer Höhe oder einer Orientierung der Bildgebungsvorrichtung für einen gegebenen Zeitraum angeben, iterativ zu schätzen, bis ein Konvergenzkriterium erfüllt ist;
(iii) das System ist dazu eingerichtet, zu bestimmen, dass ein Seeobjekt der ersten Seeobjekte und ein Seeobjekt der zweiten Seeobjekte einem selben gegebenen Seeobjekt entsprechen, welches jeweils von der Bildgebungsvorrichtung und dem wenigstens einen Sensor erfasst wird, und einen Parameter des gegebenen Seeobjekts unter Verwendung von Daten zu bestimmen, welche von dem wenigstens einen Sensor bereitgestellt werden, oder einen Parameter des gegebenen Seeobjekts unter Verwendung von Daten zu bestimmen, welche von der Bildgebungsvorrichtung bereitgestellt werden.

9. System nach einem der Ansprüche 1 bis 8, wobei wenigstens eines aus (i) oder (ii) erfüllt ist:
(i) das System ist dazu eingerichtet, eine Position wenigstens eines gegebenen Objekts der ersten Seeobjekte, welches von der Bildgebungsvorrichtung erfasst wird, auf Grundlage zweiter Positionsdaten eines gegebenen Objekts der zweiten Seeobjekte zu bestimmen, wobei eine Übereinstimmung zwischen dem gegebenen Objekt der ersten Seeobjekte und dem gegebenen Objekt der zweiten Seeobjekte auf Grundlage wenigstens eines Teils der ersten Positionsdaten und der zweiten Positionsdaten bestimmt worden ist;
(ii) ein Schätzen von Daten, welche wenigstens eines aus einer Höhe oder einer Orientierung der Bildgebungsvorrichtung angeben, umfasst ein Verwenden von Daten, welche einen Typ der ersten Seeobjekte angeben, und von Daten, welche einen Typ der zweiten Seeobjekte angeben, um eine Übereinstimmung zwischen wenigstens einigen der ersten Seeobjekte und wenigstens einigen der zweiten Seeobjekte zu bestimmen.

10. System nach einem der Ansprüche 1 bis 9, wobei wenigstens eines aus (i) oder (ii) erfüllt ist:
(i) das System ist dazu eingerichtet, Daten, welche wenigstens eines aus einer Höhe oder einer Orientierung der Bildgebungsvorrichtung angeben, wie geschätzt, und ein Bild eines Seeobjekts, welches von der Bildgebungsvorrichtung erfasst wird, zu verwenden, um Daten zu bestimmen, welche eine Position des Seeobjekts in einem bildunabhängigen Referenzsystem angeben, oder Daten, welche einen Abstand zwischen dem Seeobjekt und dem Wasserfahrzeug angeben;
(ii) das Seeobjekt wird von der Bildgebungsvorrichtung des Wasserfahrzeugs erfasst, aber es wird von keinem der anderen Sensoren, welche in dem Wasserfahrzeug vorhanden sind, erfasst, wobei die anderen Sensoren keine Bildgebungsvorrichtungen sind.

11. System nach einem der Ansprüche 1 bis 10, wobei wenigstens eines aus (i), (ii) oder (iii) erfüllt ist:
(i) das System ist dazu eingerichtet, Daten, welche wenigstens eines aus einer Höhe oder einer Orientierung der Bildgebungsvorrichtung angeben, wie geschätzt, zu verwenden, um eine Position eines Seeobjekts, welches von der Bildgebungsvorrichtung erfasst wird, und eine Position eines anderen Seeobjekts, welches von dem anderen Sensor erfasst wird, in einem gemeinsamen Referenzsystem auszugeben;
(ii) das System ist dazu eingerichtet, Daten, welche wenigstens eines aus einer Höhe oder einer Orientierung der Bildgebungsvorrichtung angeben, wie geschätzt, und Bilder des Seeobjekts, welche von dem bildgebenden Fahrzeug erfasst werden, zu verwenden, um eine Geschwindigkeit des Seeobjekts relativ zu dem Wasserfahrzeug zu bestimmen;
(iii) das System ist dazu eingerichtet, Daten, welche wenigstens eines aus einer Höhe oder einer Orientierung der Bildgebungsvorrichtung angeben, wie geschätzt, zu verwenden, um einen anderen Sensor des Wasserfahrzeugs zu kalibrieren, welcher von der Bildgebungsvorrichtung verschieden ist.

12. System nach einem der Ansprüche 1 bis 11, wobei (i), (ii) oder (iii) erfüllt ist:
(i) der PMC ist dazu eingerichtet, für jedes von einer Mehrzahl erster gegebener Seeobjekte der ersten Seeobjekte und zweiter gegebener Seeobjekte der zweiten Seeobjekte:
zu bestimmen, dass das erste gegebene Seeobjekt und das zweite gegebene Seeobjekt einem selben gegebenen Seeobjekt einer Mehrzahl gegebener Seeobjekte entsprechen, welche von der Bildgebungsvorrichtung und dem wenigstens einen Sensor erfasst werden;
einen Datensatz einer Mehrzahl annotierter Bilder zu erzeugen, wobei jedes annotierte Bild ein Bild eines gegebenen Seeobjekts der Mehrzahl gegebener Seeobjekte und eine Annotation umfasst;
(ii) der PMC ist dazu eingerichtet, für jedes von einer Mehrzahl erster gegebener Seeobjekte der ersten Seeobjekte und zweiter gegebener Seeobjekte der zweiten Seeobjekte:
zu bestimmen, dass das erste gegebene Seeobjekt und das zweite gegebene Seeobjekt einem selben gegebenen Seeobjekt einer Mehrzahl gegebener Seeobjekte entsprechen, welche von der Bildgebungsvorrichtung und dem wenigstens einen Sensor erfasst werden;
einen Datensatz einer Mehrzahl annotierter Bilder zu erzeugen, wobei jedes annotierte Bild ein Bild eines gegebenen Seeobjekts der Mehrzahl gegebener Seeobjekte und eine Annotation umfasst, welche von dem PMC auf Grundlage von Daten bestimmt wird, welche von wenigstens einem aus der Bildgebungsvorrichtung und dem wenigstens einen Sensor bereitgestellt werden;
(iii) der PMC ist dazu eingerichtet, für jedes von einer Mehrzahl erster gegebener Seeobjekte der ersten Seeobjekte und zweiter gegebener Seeobjekte der zweiten Seeobjekte:
zu bestimmen, dass das erste gegebene Seeobjekt und das zweite gegebene Seeobjekt einem selben gegebenen Seeobjekt einer Mehrzahl gegebener Seeobjekte entsprechen, welche von der Bildgebungsvorrichtung und dem wenigstens einen Sensor erfasst werden;
eine Datenbank zu erzeugen, welche für jedes der Mehrzahl gegebener Seeobjekte Daten umfasst, welche die Mehrzahl gegebener Seeobjekte angeben, und Daten, welche eine Erkennungsleistung der Mehrzahl gegebener Seeobjekte durch wenigstens eine der Bildgebungsvorrichtung und dem wenigstens einen Sensor angeben.

13. Nicht-transitorisches computerlesbares Medium, umfassend Anweisungen, welche, wenn sie von einem Prozessor- und Speicherschaltkreis, PMC, (110) ausgeführt werden, den PMC veranlassen, Daten zu schätzen, welche wenigstens eines aus einer Höhe oder einer Orientierung wenigstens einer Bildgebungsvorrichtung (120) eines Wasserfahrzeugs (125) angeben, wobei wenigstens eines aus der Höhe und der Orientierung der wenigstens einen Bildgebungsvorrichtung zeitlich veränderlich ist, wobei das Schätzen umfasst:
Erhalten erster Positionsdaten, welche eine Position erster Seeobjekte angeben, wobei die ersten Positionsdaten auf Grundlage von Bildern erhalten werden, welche von wenigstens einer Bildgebungsvorrichtung eines Wasserfahrzeugs erfasst werden,
Erhalten zweiter Positionsdaten, welche eine Position zweiter Seeobjekte angeben,
wobei die zweiten Positionsdaten auf Grundlage von Daten erhalten werden, welche von wenigstens einem Sensor (115) des Wasserfahrzeugs erfasst werden, wobei der wenigstens eine Sensor von der Bildgebungsvorrichtung verschieden ist, wobei wenigstens einige der ersten Seeobjekte dieselben sind wie wenigstens einige der zweiten Seeobjekte, und
Verwenden der ersten Positionsdaten und der zweiten Positionsdaten, um Daten zu schätzen, welche wenigstens eines aus einer Höhe oder einer Orientierung der wenigstens einen Bildgebungsvorrichtung des Wasserfahrzeugs angeben.

14. Wasserfahrzeug (125), umfassend:
wenigstens eine Bildgebungsvorrichtung (120) nach einem der Ansprüche 1 bis 12,
wenigstens einen Sensor (115), welcher von der Bildgebungsvorrichtung verschieden ist, nach einem der Ansprüche 1 bis 12, und
das System (100) nach einem der Ansprüche 1 bis 12.

## Revendications

1. Système (100) comprenant un circuit de processeur et de mémoire, PMC, (110) configuré pour estimer des données informatives d'au moins une parmi une hauteur ou une orientation d'au moins un dispositif d'imagerie (120) d'un navire marin (125), dans lequel l'au moins une parmi la hauteur et l'orientation de l'au moins un dispositif d'imagerie est variable dans le temps, l'estimation comprenant :
l'obtention de premières données de position informatives d'une position de premiers objets marins, dans lequel les premières données de position sont obtenues sur la base d'images acquises par au moins un dispositif d'imagerie d'un navire marin,
l'obtention de deuxièmes données de position informatives d'une position de deuxièmes objets marins,
dans lequel les deuxièmes données de position sont obtenues sur la base de données acquises par au moins un capteur (115) du navire marin, dans lequel l'au moins un capteur est différent du dispositif d'imagerie, dans lequel au moins certains des premiers objets marins sont identiques à au moins certains des deuxièmes objets marins, et
l'utilisation des premières données de position et des deuxièmes données de position pour estimer des données informatives d'au moins une parmi une hauteur ou une orientation du dispositif d'imagerie du navire marin,
dans lequel au moins un parmi les points (i) ou (ii) est satisfait :
(i) l'utilisation des premières données de position et des deuxièmes données de position comprend la détermination de données D_{camera} informatives d'au moins une parmi une hauteur ou une orientation du dispositif d'imagerie qui optimisent une correspondance entre :
une position d'au moins certains des premiers objets marins déterminée en utilisant D_{camera} et les premières données de position, et
des deuxièmes données de position d'au moins certains des deuxièmes objets marins selon un critère ;
(ii) le système est configuré pour utiliser les premières données de position et les deuxièmes données de position pour déterminer des données D_{field_of_view} informatives d'un champ de vision du dispositif d'imagerie qui optimisent une correspondance entre :
une position d'au moins certains des premiers objets marins déterminée en utilisant D_{field_of_view} et les premières données de position, et
des deuxièmes données de position d'au moins certains des deuxièmes objets marins, selon un critère.

2. Système selon la revendication 1, dans lequel l'orientation comprend au moins l'un parmi un roulis, un tangage et un lacet de l'au moins un dispositif d'imagerie, dans lequel le système est configuré pour estimer au moins l'un parmi le roulis, le tangage et le lacet de l'au moins un dispositif d'imagerie dans le temps.

3. Système selon la revendication 1 ou selon la revendication 2, configuré pour réaliser au moins un parmi les points (i) ou (ii) :
(i) l'estimation de données informatives d'au moins une parmi une hauteur ou une orientation de l'au moins un dispositif d'imagerie sur une première période, pour obtenir des premières données estimées, et l'estimation de données informatives d'au moins une parmi une hauteur ou une orientation de l'au moins un dispositif d'imagerie sur une deuxième période, différente de la première période, en utilisant les premières données estimées ;
(ii) l'estimation de données informatives d'au moins une parmi une hauteur ou une orientation de l'au moins un dispositif d'imagerie sur une première période, ladite estimation comprenant la détermination d'une association entre au moins certains des premiers objets marins et au moins certains des deuxièmes objets marins, et l'estimation de données informatives d'au moins une parmi une hauteur ou une orientation de l'au moins un dispositif d'imagerie sur une deuxième période, différente de la première période, en utilisant ladite association.

4. Système selon l'une quelconque des revendications 1 à 3, configuré pour :
(1) obtenir des premières données de position informatives d'une position de premiers objets marins FIRSTMOBJ_{1,i} à FIRSTMOBJ_{N,i} sur une première période T_{1,i}, dans lequel les premières données de position sont obtenues sur la base d'images acquises par l'au moins un dispositif d'imagerie du navire marin,
(2) obtenir des deuxièmes données de position informatives d'une position de deuxièmes objets marins SNDMOBJ_{1,i} à SNDMOBJ_{M,i} sur une deuxième période T_{2,i},
dans lequel la première période T_{1,i} et la deuxième période T_{2,i} répondent à un critère de synchronisation,
dans lequel les deuxièmes données de position sont obtenues sur la base de données acquises par l'au moins un capteur du navire marin, dans lequel l'au moins un capteur est différent du dispositif d'imagerie, dans lequel au moins certains des premiers objets marins FIRSTMOBJ_{1,i} à FIRSTMOBJ_{N,i} sont identiques à au moins certains des deuxièmes objets marins SNDMOBJ_{1,i} à SNDMOBJ_{M,i},
(3) utiliser les premières données de position et les deuxièmes données de position pour estimer des données informatives d'au moins une parmi une hauteur ou une orientation de l'au moins un dispositif d'imagerie du navire marin, et
(4) répéter (1), (2) et (3) pour i incrémenté d'un, dans lequel une première période T_{1,i+1} diffère de T_{1,i} et une deuxième période T_{1,i+1} diffère de T_{2,i}, pour estimer de manière répétée des données informatives d'au moins une parmi une hauteur ou une orientation du dispositif d'imagerie du navire marin dans le temps.

5. Système selon l'une quelconque des revendications 1 à 4, dans lequel au moins un parmi les points (i), (ii) et (iii) est satisfait :
(i) l'au moins un capteur n'est pas un dispositif d'imagerie ;
(ii) l'au moins un capteur inclut au moins l'un parmi un radar et un système d'identification automatique, AIS ;
(iii) l'au moins un capteur inclut un premier capteur et un deuxième capteur, dans lequel le deuxième capteur est d'un type différent du premier capteur, et dans lequel le premier capteur et le deuxième capteur ne sont pas des dispositifs d'imagerie.

6. Système selon l'une quelconque des revendications 1 à 5, dans lequel le point (i) ou (ii) est satisfait :
(i) le système est configuré pour obtenir un ensemble de premières données de position informatives d'une position de premiers objets marins, dans lequel l'ensemble de premières données de position est obtenu sur la base d'images acquises par l'au moins un dispositif d'imagerie du navire marin, dans lequel l'ensemble de premières données position comprend, pour chaque objet d'une pluralité des premiers objets marins, une position de l'objet sur une pluralité de premières périodes,
obtenir un ensemble de deuxièmes données de position informatives d'une position de deuxièmes objets marins,
dans lequel l'ensemble de deuxièmes données de position comprend, pour chaque objet d'une pluralité des deuxièmes objets marins, une position de l'objet sur une pluralité de périodes,
dans lequel les premières périodes et les deuxièmes périodes répondent à un critère de synchronisation,
dans lequel l'ensemble de deuxièmes données de position est obtenu sur la base de données acquises par au moins un capteur du navire marin,
dans lequel l'au moins un capteur est différent du dispositif d'imagerie, dans lequel au moins certains des premiers objets marins sont identiques à au moins certains des deuxièmes objets marins, et
utiliser le premier ensemble de données de position et le deuxième ensemble de données de position pour estimer des données informatives d'au moins une parmi une hauteur ou une orientation du dispositif d'imagerie dans le temps ;
(ii) le système est configuré pour obtenir un ensemble de premières données de position informatives d'une position de premiers objets marins, dans lequel l'ensemble de premières données de position est obtenu sur la base d'images acquises par l'au moins un dispositif d'imagerie du navire marin, dans lequel l'ensemble de premières données de position comprend, pour chaque objet d'une pluralité des premiers objets marins, une position de l'objet sur une pluralité de premières périodes,
obtenir un ensemble de deuxièmes données de position informatives d'une position de deuxièmes objets marins,
dans lequel l'ensemble de deuxièmes données de position comprend, pour chaque objet d'une pluralité des deuxièmes objets marins, une position de l'objet sur une pluralité de périodes,
dans lequel les premières périodes et les deuxièmes périodes répondent à un critère de synchronisation,
dans lequel l'ensemble de deuxièmes données de position est obtenu sur la base de données acquises par au moins un capteur du navire marin,
dans lequel l'au moins un capteur est différent du dispositif d'imagerie, dans lequel au moins certains des premiers objets marins sont identiques à au moins certains des deuxièmes objets marins,
utiliser le premier ensemble de données de position et le deuxième ensemble de données de position pour estimer des données informatives d'au moins une parmi une hauteur ou une orientation du dispositif d'imagerie dans le temps,
suivre la position d'au moins certains des premiers objets marins sur les premières périodes et la position d'au moins certains des deuxièmes objets marins sur les deuxièmes périodes, et
utiliser ledit suivi pour estimer des données D_{camera} informatives d'au moins une parmi une hauteur ou une orientation du dispositif d'imagerie qui optimisent une correspondance entre une position d'au moins certains des premiers objets marins déterminée en utilisant D_{camera} et l'ensemble de premières données de position, et une position des deuxièmes objets marins obtenue sur la base du deuxième ensemble de données de position.

7. Système selon l'une quelconque des revendications 1 à 6, dans lequel le point (i) ou (ii) est satisfait :
(i) le système est configuré pour obtenir des premières données de position informatives d'une position de premiers objets marins, dans lequel les premières données de position sont obtenues sur la base d'images acquises par au moins un dispositif d'imagerie d'un navire marin,
obtenir des deuxièmes données de position informatives d'une position de deuxièmes objets marins,
dans lequel les deuxièmes données de position sont obtenues sur la base de données acquises par au moins un premier capteur du navire marin, dans lequel l'au moins un premier capteur est différent du dispositif d'imagerie,
obtenir des troisièmes données de position informatives d'une position de troisièmes objets marins,
dans lequel les troisièmes données de position sont obtenues sur la base de données acquises par au moins un deuxième capteur du navire marin, dans lequel l'au moins un deuxième capteur est différent du dispositif d'imagerie et du premier capteur,
dans lequel au moins certains des premiers, deuxièmes et troisièmes objets marins sont les mêmes objets marins,
utiliser les premières données de position, les deuxièmes données de position et les troisièmes données de position pour estimer des données informatives d'au moins une parmi une hauteur ou une orientation du dispositif d'imagerie du navire marin ;
(ii) le système est configuré pour obtenir des premières données de position informatives d'une position de premiers objets marins, dans lequel les premières données de position sont obtenues sur la base d'images acquises par au moins un dispositif d'imagerie d'un navire marin,
obtenir des deuxièmes données de position informatives d'une position de deuxièmes objets marins, dans lequel les deuxièmes données de position sont obtenues sur la base de données acquises par au moins un premier capteur du navire marin,
dans lequel l'au moins un premier capteur est différent du dispositif d'imagerie, obtenir des troisièmes données de position informatives d'une position de troisièmes objets marins,
dans lequel les troisièmes données de position sont obtenues sur la base de données acquises par au moins un deuxième capteur du navire marin,
dans lequel l'au moins un deuxième capteur est différent du dispositif d'imagerie et du premier capteur,
dans lequel au moins certains des premiers, deuxièmes et troisièmes objets marins sont les mêmes objets marins,
utiliser les premières données de position, les deuxièmes données de position et les troisièmes données de position pour estimer des données informatives d'au moins une parmi une hauteur ou une orientation du dispositif d'imagerie du navire marin, et
associer au moins certains des deuxièmes objets marins à au moins certains des troisièmes objets marins pour générer un ensemble agrégé d'objets marins, chacun étant associé à une position fournie par le premier capteur ou le deuxième capteur.

8. Système selon l'une quelconque des revendications 1 à 7, dans lequel au moins un parmi les points (i), (ii) ou (iii) est satisfait :
(i) le système est configuré pour déterminer des données D_{camera} informatives d'au moins une parmi une hauteur ou une orientation du dispositif d'imagerie qui optimisent une correspondance entre la position d'au moins certains des premiers objets marins projetés dans un référentiel commun en utilisant D_{camera} et les premières données de position, et la position dans le référentiel commun d'au moins certains des deuxièmes objets marins selon un critère ;
(ii) le système est configuré pour estimer de manière itérative des données informatives d'au moins une parmi une hauteur ou une orientation du dispositif d'imagerie sur une période donnée, jusqu'à ce qu'un critère de convergence soit rempli ;
(iii) le système est configuré pour déterminer qu'un objet marin des premiers objets marins et un objet marin des deuxièmes objets marins correspondent à un même objet marin donné acquis respectivement par le dispositif d'imagerie et l'au moins un capteur, et déterminer un paramètre de l'objet marin donné en utilisant des données fournies par l'au moins un capteur, ou déterminer un paramètre de l'objet marin donné en utilisant des données fournies par le dispositif d'imagerie.

9. Système selon l'une quelconque des revendications 1 à 8, dans lequel au moins un parmi les points (i) ou (ii) est satisfait :
(i) le système est configuré pour déterminer une position d'au moins un objet donné des premiers objets marins acquis par le dispositif d'imagerie sur la base de deuxièmes données de position d'un objet donné des deuxièmes objets marins, dans lequel une correspondance entre l'objet donné des premiers objets marins et l'objet donné des deuxièmes objets marins a été déterminée sur la base d'au moins une partie des premières données de position et des deuxièmes données de position ;
(ii) l'estimation de données informatives d'au moins une parmi une hauteur ou une orientation du dispositif d'imagerie comprend l'utilisation de données informatives d'un type des premiers objets marins et des données informatives d'un type des deuxièmes objets marins pour déterminer une correspondance entre au moins certains des premiers objets marins et au moins certains des deuxièmes objets marins.

10. Système selon l'une quelconque des revendications 1 à 9, dans lequel au moins un point parmi (i) ou (ii) est satisfait :
(i) le système est configuré pour utiliser des données informatives d'au moins une parmi une hauteur ou une orientation du dispositif d'imagerie telle qu'estimée et une image d'un objet marin acquise par le dispositif d'imagerie pour déterminer des données informatives d'une position de l'objet marin dans un référentiel indépendant de l'image, ou des données informatives d'une distance entre l'objet marin et le navire marin ;
(ii) l'objet marin est acquis par le dispositif d'imagerie du navire marin, mais n'est pas détecté par l'un quelconque des autres capteurs présents dans le navire marin, dans lequel lesdits autres capteurs ne sont pas des dispositifs d'imagerie.

11. Système selon l'une quelconque des revendications 1 à 10, dans lequel au moins un parmi les points (i), (ii) ou (iii) est satisfait :
(i) le système est configuré pour utiliser des données informatives d'au moins une parmi une hauteur ou une orientation du dispositif d'imagerie telle qu'estimée pour émettre une position d'un objet marin telle qu'acquise par le dispositif d'imagerie et une position d'un autre objet marin acquise par l'autre capteur dans un référentiel commun ;
(ii) le système est configuré pour utiliser des données informatives d'au moins une parmi une hauteur ou une orientation du dispositif d'imagerie telle qu'estimée, et des images de l'objet marin acquises par le navire d'imagerie, pour déterminer une vitesse de l'objet marin par rapport au navire marin ;
(iii) le système est configuré pour utiliser des données informatives d'au moins une parmi une hauteur ou une orientation du dispositif d'imagerie telle qu'estimée pour étalonner un autre capteur du navire marin, différent du dispositif d'imagerie.

12. Système selon l'une quelconque des revendications 1 à 11, dans lequel un point parmi (i), (ii) ou (iii) est satisfait :
(i) le PMC est configuré pour, pour chacun d'une pluralité de premiers objets marins donnés des premiers objets marins et de deuxièmes objets marins donnés des deuxièmes objets marins :
déterminer que le premier objet marin donné et le deuxième objet marin donné correspondent à un même objet marin donné d'une pluralité d'objets marins donnés acquis par le dispositif d'imagerie et l'au moins un capteur,
générer un ensemble de données d'une pluralité d'images étiquetées, dans lequel chaque image étiquetée comprend une image d'un objet marin donné de ladite pluralité d'objets marins donnés, et une étiquette ;
(ii) le PMC est configuré pour, pour chacun d'une pluralité de premiers objets marins donnés des premiers objets marins et de deuxièmes objets marins donnés des deuxièmes objets marins :
déterminer que le premier objet marin donné et le deuxième objet marin donné correspondent à un même objet marin donné d'une pluralité d'objets marins donnés acquis par le dispositif d'imagerie et l'au moins un capteur,
générer un ensemble de données d'une pluralité d'images étiquetées, dans lequel chaque image étiquetée comprend une image d'un objet marin donné de ladite pluralité d'objets marins donnés, et une étiquette déterminée par le PMC sur la base de données fournies par au moins un parmi le dispositif d'imagerie et l'au moins un capteur ;
(iii) le PMC est configuré pour, pour chacun d'une pluralité de premiers objets marins donnés des premiers objets marins et de deuxièmes objets marins donnés des deuxièmes objets marins :
déterminer que le premier objet marin donné et le deuxième objet marin donné correspondent à un même objet marin donné d'une pluralité d'objets marins donnés acquis par le dispositif d'imagerie et l'au moins un capteur,
générer une base de données comprenant pour chacun de ladite pluralité d'objets marins donnés, des données informatives de ladite pluralité d'objets marins donnés, et des données informatives de la performance de détection de ladite pluralité d'objets marins donnés par au moins un parmi le dispositif d'imagerie et l'au moins un capteur.

13. Support non transitoire lisible par ordinateur comprenant des instructions qui, lorsqu'elles sont exécutées par un circuit de processeur et de mémoire, PMC, (110) amènent le PMC à estimer des données informatives d'au moins une parmi une hauteur ou une orientation d'au moins un dispositif d'imagerie (120) d'un navire marin (125), dans lequel au moins une parmi la hauteur et l'orientation de l'au moins un dispositif d'imagerie est variable dans le temps, l'estimation comprenant :
l'obtention de premières données de position informatives d'une position de premiers objets marins, dans lequel les premières données de position sont obtenues sur la base d'images acquises par au moins un dispositif d'imagerie d'un navire marin,
l'obtention de deuxièmes données de position informatives d'une position de deuxièmes objets marins,
dans lequel les deuxièmes données de position sont obtenues sur la base de données acquises par au moins un capteur (115) du navire marin, dans lequel l'au moins un capteur est différent du dispositif d'imagerie, dans lequel au moins certains des premiers objets marins sont identiques à au moins certains des deuxièmes objets marins, et
l'utilisation des premières données de position et des deuxièmes données de position pour estimer des données informatives d'au moins une parmi une hauteur ou une orientation de l'au moins un dispositif d'imagerie du navire marin.

14. Navire marin (125) comprenant :
au moins un dispositif d'imagerie (120) selon l'une quelconque des revendications 1 à 12,
au moins un capteur (115) différent du dispositif d'imagerie, selon l'une quelconque des revendications 1 à 12, et
le système (100) selon l'une quelconque des revendications 1 à 12.
